(19) Europäisches Patentamt
European Patent Office
Office européen des brevets

(11) **EP 3 285 129 B1**

(12) **EUROPÄISCHE PATENTSCHRIFT**

(45) Veröffentlichungstag und Bekanntmachung des Hinweises auf die Patenterteilung:
**09.12.2020   Patentblatt 2020/50**

(51) Int Cl.:
***B60W 50/00*** (2006.01)      ***B60W 30/18*** (2012.01)
***G05D 1/02*** (2020.01)      ***B60W 30/16*** (2020.01)
***G08G 1/00*** (2006.01)

(21) Anmeldenummer: **17185096.9**

(22) Anmeldetag: **07.08.2017**

(54) **TECHNIK ZUR LÄNGSFÜHRUNG IN EINEM FAHRZEUGVERBAND**

TECHNIQUE FOR LONGITUDINALLY GUIDING IN A GUIDED VEHICLE SYSTEM

TECHNIQUE DE GUIDAGE LONGITUDINAL DANS UN VÉHICULE EN GROUPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2016   DE 102016010062**

(43) Veröffentlichungstag der Anmeldung:
**21.02.2018   Patentblatt 2018/08**

(73) Patentinhaber: **MAN Truck & Bus SE**
**80995 München (DE)**

(72) Erfinder: **Huber, Martin**
**81243 München (DE)**

(74) Vertreter: **v. Bezold & Partner Patentanwälte - PartG mbB**
**Akademiestraße 7**
**80799 München (DE)**

(56) Entgegenhaltungen:
**EP-A1- 2 251 240      EP-A2- 0 263 262**
**US-A1- 2014 005 906**

**Beschreibung**

Die vorliegende Erfindung betrifft eine Technik zur Längsführung eines Fahrzeugs in einem Fahrzeugverband hintereinanderfahrender Fahrzeuge. Insbesondere sind ein Verfahren und eine Vorrichtung zur Längsführung des Antriebs eines Nutzfahrzeugs in Kommunikation mit weiteren Fahrzeugen des Fahrzeugverbands beschrieben.

Das Fahren mehrerer Fahrzeuge in einem Fahrzeugverband ist heute nicht mehr die Ausnahme, sondern die Regel. Der Kraftstoffverbrauch und die $CO_2$-Emissionen werden bei Fahrzeugen, die beispielsweise im Fernverkehr im Einsatz sind, zu einem überwiegenden Anteil durch den Luftwiderstand verursacht. Hinreichend dicht hintereinanderfahrende Fahrzeuge können ihren Verbrauch und ihre Emissionen erheblich reduzieren, da der Luftwiderstand nur am ersten Fahrzeug des Fahrzeugverbands in vollem Umfang zum Tragen kommt.

Das Dokument EP 0 263 262 A2 beschreibt ein Abstandsregelungssystem für Kraftfahrzeuge. Zur Regelung des Abstands zwischen mehreren, innerhalb eines Fahrzeugverbands fahrenden Kraftfahrzeugen wird deren Antriebs- bzw. Verzögerungsleistung so gesteuert, dass die zeitliche Änderung der fahrzeugeigenen Geschwindigkeit eines jeden Kraftfahrzeugs einer Sollbeschleunigung mit minimaler Differenz bzw. vorgegebener Dynamik nachgeführt wird. Hierzu wird innerhalb eines Kraftfahrzeugs des Fahrzeugverbands die erforderliche Sollbeschleunigung bereitgestellt und den anderen Fahrzeugen drahtlos übermittelt. Die Vorgabe der Sollbeschleunigung kann durch einen Fahrzeugführer des den Fahrzeugverband anführenden Kraftfahrzeugs erfolgen.

Das Dokument EP 2 251 240 A1 beschreibt ein Verfahren zur automatischen Längsführung eines Kraftfahrzeugs mittels eines adaptives Längsführungssystem. Eine Steuerungseinrichtung des Längsführungssystems erfasst Informationen betreffend die Abstände zu mehreren vorausfahrenden Kraftfahrzeugen, die jeweiligen Geschwindigkeiten dieser Kraftfahrzeuge und die jeweiligen Beschleunigungen dieser Kraftfahrzeuge erfasst. In Abhängigkeit der erfassten Informationen erfolgt die Längsführung des Kraftfahrzeugs.

Das Dokument US 2014/0005906 A1 beschreibt ein Fahrzeugverbandsmodell zur verbesserten Vorhersage eines zukünftigen Fahrzeugzustands. Der dynamische Zustand des vorausfahrenden Fahrzeugs wird anhand von Daten, die von einem oder mehreren Fahrzeugen im Verband empfangen wurden, vorhergesagt. Ein Fahrermodell wird für die Dynamik innerhalb des Verbands erweitert. Ein Parameterschätzungsansatz kann verwendet werden, um die Modellparameter zu schätzen, z.B. zur Anpassung an verschiedene Fahrertypen.

Trotz der dicht aufeinanderfolgenden Fahrzeuge im Fahrzeugverband kann eine hohe Sicherheit gegen Auffahrunfälle erreicht werden, indem die Fahrzeuge miteinander kommunizieren (d.h. "vernetzt sind"), beispielsweise zum automatisierten und zeitgleichen Abbremsen der Fahrzeuge. Der Einsatz solcher Fahrzeugverbände (die auch als Fahrzeugkolonnen oder Platoon-Fahrten bezeichnet werden) wird derzeit mit Sondergenehmigungen in mehreren Ländern erprobt. Zukünftig werden (beispielsweise unter bestimmten Bedingungen wie Vernetzung, automatisierte Längs- und Querführung) Fahrzeugverbände mit einem für die Aerodynamik signifikanten Abstand zwischen den Fahrzeugen grundsätzlich zugelassen.

Der spezifische Kraftstoffverbrauch eines Antriebs mit Verbrennungskraftmaschine, d.h. das Verhältnis zwischen Kraftstoffverbrauch pro Zeiteinheit und abgegebener mechanischer Leistung, ist bei einer bestimmten Kombination von Drehzahl und Drehmoment minimal. Dieser Betriebsbereich wird auch als wirkungsgradgünstiger Betriebsbereich oder verbrauchsgünstiger oder effizienter Betriebszustand bezeichnet. Bei einer Fahrt auf horizontaler Strecke, bei geringer Steigung oder bei geringem Gefälle wird die Verbrennungskraftmaschine des Fahrzeugs üblicherweise nicht in diesem effizienten Betriebszustand betrieben, sondern in einem Teillastbereich mit schlechterem Motorwirkungsgrad. Der effiziente Betriebszustand ist aber nicht zwangsläufig für alle Fahrzeuge im Fahrzeugverband gleich. Grund dafür können, insbesondere bei Nutzfahrzeugen (beispielsweise Lastkraftwägen und Bussen), ungleiche Fahrzeugmassen und/oder unterschiedliche Fahrzeugmotorisierungen sein. Entsprechende Zusammenhänge gelten auch für Elektrofahrzeuge und Hybrid-Fahrzeuge mit einem kombinierten Antrieb.

Um den Kraftstoffbrauch dennoch zu optimieren, kann der Antrieb in einem Intervallbetrieb gesteuert werden. Der Artikel "Effect of Pulse-and-Glide Strategy on Traffic Flow for a Platoon of Mixed Automated and Manually Driven Vehicles", COMPUTER-AIDED CIVIL AND INFRASTRUCTURE ENGINEERING, Band 30, Ausgabe 11, Seiten 892 bis 905, Wiley 2015, beschreibt allgemeine Vorteile eines solchen Intervallbetriebs für das einzelne Fahrzeug ohne Vernetzung.

Somit besteht die Aufgabe, eine Antriebssteuerung anzugeben, welche den Kraftstoffverbrauch weiter verringert. Eine alternative oder zusätzliche Aufgabe ist, einen Fahrzeug-individuellen effizienten Betriebszustand im aerodynamisch vorteilhaften Fahrzeugverband zu ermöglichen.

Diese Aufgabe oder Aufgaben werden durch eine Technik mit den Merkmalen der unabhängigen Ansprüche gelöst. Vorteilhafte Ausführungsformen und Anwendung der Erfindung sind Gegenstand der abhängigen Ansprüche und werden in der folgenden Beschreibung unter teilweiser Bezugnahme auf die Figuren näher erläutert.

Gemäß einem Aspekt der Erfindung ist ein Verfahren zur Längsführung eines Nutzfahrzeugs in einem Fahrzeugverband hintereinanderfahrender Fahrzeuge bereitgestellt. Das Verfahren bewirkt oder umfasst den Schritt des Bestimmens von Parametern eines zukünftigen Intervallbetriebs der Längsführung des Nutzfahrzeugs in Kommunikation mit einem im Fahrzeugverband vorausfahrenden und/oder nachfahrenden, ebenfalls in einem Intervallbetrieb angetriebenen Fahrzeug; und den Schritt der Längsführung des Nutzfahrzeugs im Intervallbetrieb auf Grundlage der bestimmten Parameter des Nutzfahrzeugs.

Durch die Kommunikation können die Intervallbetriebe der einzelnen Fahrzeuge korreliert sein und zugleich einen Fahrzeug-individuellen effizienten Betriebszustand des jeweiligen Antriebs nutzen. Beispielsweise können durch die Kommunikation Antriebsphasen des Intervallbetriebs im Fahrzeugverband benachbarter Fahrzeuge zeitlich überlappen. Alternativ oder ergänzend können durch die Kommunikation Rollphasen des Intervallbetriebs im Fahrzeugverband benachbarter Fahrzeuge zeitlich überlappen. Während das einzelne Nutzfahrzeug seinen optimierten Intervallbetrieb steuert, kann durch die Kommunikation eine einheitliche Fahrgeschwindigkeit des Fahrzeugverbands und/oder ein Abstand zwischen benachbarten Fahrzeugen mit geringer Schwankung eingehalten werden.

Alternativ oder ergänzend kann durch die Kommunikation der Parameter des zukünftigen Intervallbetriebs der korrelierte Intervallbetrieb im Fahrzeugverband mit einer geringen Datenrate der Kommunikation erreicht werden. Durch eine dateneffiziente Kommunikation des zukünftigen Intervallbetriebs mittels der Parameter kann der zukünftige Intervallbetrieb häufiger kommuniziert werden (beispielsweise bei einer gegebenen Datenrate der Kommunikation) zur robusteren Steuerung des Antriebs. Insbesondere kann eine Zeitdauer des durch die kommunizierten Parameter bestimmten zukünftigen Intervallbetriebs (beispielsweise vielfach) länger sein als ein Intervall, in dem aktualisierte Parameter kommuniziert werden. Dadurch kann die Korrelation des Intervallbetriebs robust gegen den Ausfall einzelner Parameterkommunikationen sein.

Das vorausfahrende Fahrzeug und/oder das nachfahrende Fahrzeug kann ein Straßenfahrzeug und/oder Nutzfahrzeug sein. Jedes der im Fahrzeugverband hintereinanderfahrenden Fahrzeuge kann ein Straßenfahrzeug und/oder Nutzfahrzeug sein. Der Begriff Nutzfahrzeug schließt Lastkraftwägen, Zugmaschinen, Sattelzüge, Busse, Militärfahrzeuge und/oder Begleitfahrzeuge ein.

Ein Antrieb des vorausfahrenden Fahrzeugs, ein Antrieb des Nutzfahrzeugs und/oder ein Antrieb des nachfahrenden Fahrzeugs kann jeweils gemäß dem Intervallbetrieb im jeweiligen Fahrzeug gesteuert werden. Durch die Kommunikation können der Intervallbetrieb des vorausfahrenden Fahrzeugs, der Intervallbetrieb des Nutzfahrzeugs und/oder der Intervallbetrieb des nachfahrenden Fahrzeugs mindestens eine der folgenden Größen angleichen oder korrelieren: eine (beispielsweise zeitgemittelte) Frequenz des Intervallbetriebs, eine (beispielsweise zeitgemittelte) Fahrgeschwindigkeit (auch: Fahrgeschwindigkeit des Fahrzeugverbands), eine Phase der Beschleunigung im Intervallbetrieb und/oder eine Phase der Verzögerung im Intervallbetrieb. Das Angleichen oder Korrelieren kann auf der Kommunikation von Umschaltpunkten des Intervallbetriebs basieren.

Die Kommunikation kann ausschließlich das im Fahrzeugverband vorausfahrende Fahrzeug (beispielsweise falls das Nutzfahrzeug das letzte Fahrzeug im Fahrzeugverband ist), ausschließlich das im Fahrzeugverband nachfahrende Fahrzeug (beispielsweise falls das Nutzfahrzeug das erste Fahrzeug im Fahrzeugverband ist) oder beide in Fahrtrichtung im Fahrzeugverband benachbarte Fahrzeuge umfassen (beispielsweise falls das Nutzfahrzeug innerhalb des Fahrzeugverbands angeordnet ist).

Die Parameter des zukünftigen Intervallbetriebs der Längsführung des Nutzfahrzeugs werden auch als Parameter des Nutzfahrzeugs bezeichnet. Die Kommunikation mit einem anderen Fahrzeug im Fahrzeugverband kann jeweils ausschließlich ein Senden der Parameter des Nutzfahrzeugs (beispielsweise falls das Nutzfahrzeug das erste Fahrzeug im Fahrzeugverband ist), ausschließlich ein Empfangen von Parameter des anderen Fahrzeugs (beispielsweise falls das Nutzfahrzeug das letzte Fahrzeug im Fahrzeugverband ist) oder eine bidirektionale Kommunikation der Parameter zwischen dem Nutzfahrzeug und dem anderen Fahrzeug umfassen.

Ferner kann die Kommunikation ausschließlich Grundlage für das Bestimmen sein, ausschließlich Ergebnisse des Bestimmens umfassen oder sowohl Einflussgrößen als auch Ergebnisse des Bestimmens umfassen. Die Kommunikation der Grundlage kann dem Bestimmen zeitlich vorausgehen, die Kommunikation der Grundlage und/oder des Ergebnisses kann während des Bestimmens ablaufen oder die Kommunikation des Ergebnisses kann sich an das Bestimmen anschließen.

Die Kommunikation (beispielsweise das Senden und/oder das Empfangen) kann auf einer Vernetzung der Fahrzeuge im Fahrzeugverband basieren. Die Kommunikation kann Teil einer Fahrzeug-zu-Fahrzeug-Kommunikation oder Verkehrstelematik (engl.: "Intelligent Transportation Systems" oder ITS) sein, beispielsweise gemäß EU-Richtlinie 2010/40/EU.

Die Fahrzeuge im Fahrzeugverband können direkt miteinander kommunizieren oder indirekt, beispielsweise über eine oder mehrere Mobilfunkbasisstationen und/oder einen oder mehrere Server. Die Fahrzeuge im Fahrzeugverband können paarweise miteinander kommunizieren oder über einen gemeinsamen Kommunikationskanal.

Die Fahrzeuge im Fahrzeugverband können über Radiofrequenzen oder optisch kommunizieren. Die Radiofrequenzen können in einem Frequenzband bei 5.9 GHz oder dem ITS-Frequenzband (beispielsweise zwischen 5,85 GHz bis 5,925 GHz) liegen. Die Kommunikation kann auf einer physikalischen Ebene und/oder einer Ebene der Medienzugriffssteuerung gemäß dem Standard ETSI EN 302 663 und/oder dem Standard IEEE 802.11p ausgebildet sein.

Die Parameter können kinematische Prädikatoren (z. B. Geschwindigkeiten) des jeweiligen Fahrzeugs umfassen. Die Parameter können ferner den kinematischen Prädikatoren jeweils zugeordnete Zeitpunkte umfassen. Die kinematischen Prädikatoren können sich auf Phasen des Intervallbetriebs und/oder Umschaltpunkte zwischen den Phasen beziehen. Die Zeitpunkte können sich auf Anfang, Übergang und/oder Ende der Phasen beziehen.

Die Parameter des Nutzfahrzeugs können beispielsweise einen Fahrweg des Nutzfahrzeugs, einen Abstand zum vorausfahrenden Fahrzeug, eine Fahrgeschwindigkeit des Nutzfahrzeugs, eine Relativgeschwindigkeit zum vorausfahrenden Fahrzeug und/oder eine Beschleunigung des Nutzfahrzeugs umfassen. Das Bestimmen der Parameter kann ein Vorausberechnen der kinematischen Prädikatoren und/oder der Zeitpunkte umfassen.

Die Parameter des vorausfahrenden Fahrzeugs können beispielsweise einen Fahrweg des vorausfahrenden Fahrzeugs, eine Fahrgeschwindigkeit des vorausfahrenden Fahrzeugs und/oder eine Beschleunigung des vorausfahrenden Fahrzeugs umfassen.

Die bestimmten Parameter des Nutzfahrzeugs können an das nachfahrende Fahrzeug gesendet werden. Die gesendeten Parameter können ein Bestimmen von Parametern des zukünftigen Intervallbetriebs einer Längsführung des nachfahrenden Fahrzeugs bewirken und/oder den Intervallbetrieb der Längsführung des nachfahrenden Fahrzeugs steuern. Die an das nachfolgende Fahrzeug gesendeten Parameter des Nutzfahrzeugs können Grundlage für ein Bestimmen von Parametern des zukünftigen Intervallbetriebs des nachfolgenden Fahrzeugs sein.

Parameter des zukünftigen Intervallbetriebs einer Längsführung des vorausfahrenden Fahrzeugs können empfangen werden. Die Parameter des Nutzfahrzeugs können auf Grundlage der empfangenen Parameter des vorausfahrenden Fahrzeugs bestimmt werden.

Die Parameter des zukünftigen Intervallbetriebs der Längsführung des im Fahrzeugverband vorausfahrenden Fahrzeugs werden auch als Parameter des vorausfahrenden Fahrzeugs bezeichnet. Die Parameter des vorausfahrenden Fahrzeugs können (beispielsweise direkt) vom vorausfahrenden Fahrzeug empfangen werden.

Die Parameter des jeweiligen Fahrzeugs können einen zukünftigen Verlauf (auch: Trajektorie) der Fahrgeschwindigkeit des jeweiligen Fahrzeugs definieren, beispielsweise für eine horizontale Fahrbahn, eine durchschnittliche Beschaffenheit eines Fahrbahnbelags und/oder den Luftwiderstand eines einzeln fahrenden Fahrzeugs. Die bestimmten Parameter, die empfangenen Parameter und/oder durch die bestimmten Parameter und die empfangenen Parameter definierte Verläufe (beispielsweise der Fahrgeschwindigkeit und/oder des Abstands) können der Längsführung des Nutzfahrzeugs zugrunde gelegt sein. Beispielsweise kann der Antrieb, eine Kupplung, Bremse und/oder eine Komponente eines Antriebsstrangs gesteuert oder geregelt werden mit den Verläufen als Führungsgröße. Eine Regelung mit dem Abstand als Führungsgröße wird auch als Abstandsregelung bezeichnet. Optional kann die Abstandsregelung eine Verzögerung veranlassen (beispielsweise beim Unterschreiten eines Mindestabstands) und/oder abhängig vom Gefälle eine Bremsung anfordern.

Die Parameter und/oder die Verläufe können verändert oder korrigiert werden, beispielsweise hinsichtlich Steigung oder Gefälle der Fahrbahn, gemessener Beschaffenheit des Fahrbahnbelags und/oder Luftwiderstand bei einem gemessenen Abstand zum vorausfahrenden Fahrzeug.

Das Verfahren kann im Nutzfahrzeug ausgeführt werden. Insofern kann das Nutzfahrzeug auch als das eigene Fahrzeug bezeichnet werden. Ferner kann das Verfahren jeweils in jedem Fahrzeug, oder jedem nachfahrenden Fahrzeug, des Fahrzeugverbands ausgeführt werden.

Das Steuern kann den Schritt des Vorausberechnens eines zukünftigen Verlaufs einer Fahrgeschwindigkeit des vorausfahrenden Fahrzeugs auf Grundlage der empfangenen Parameter des vorausfahrenden Fahrzeugs umfassen. Alternativ oder ergänzend kann das Steuern den Schritt des Vorausberechnens eines zukünftigen Verlaufs einer Fahrgeschwindigkeit des Nutzfahrzeugs auf Grundlage der bestimmten Parameter des Nutzfahrzeugs umfassen. Optional wird ein zukünftiger Verlauf eines Abstands zwischen dem Nutzfahrzeug und dem vorausfahrenden Fahrzeug auf Grundlage der vorausberechneten Verläufe der Fahrgeschwindigkeit des vorausfahrenden Fahrzeugs und der Fahrgeschwindigkeit des Nutzfahrzeugs vorausberechnet.

Die zukünftigen Verläufe können für eine bestimmte vor dem Nutzfahrzeug liegende Strecke (beispielsweise 500 m, 1000 m, 3000 m oder mehr) vorausberechnet werden. Die Verläufe können jeweils durch einen Datensatz oder Vektor dargestellt sein. Jeder Eintrag des Datensatzes oder jedes Element des Vektors kann auf einen bestimmten Ort und/oder eine bestimmte Zeit bezogen sein. Der Ort kann in einem Bezugssystem einer vom Fahrzeugverband befahrenen Straße oder Fahrbahn (beispielsweise eindimensional in Längsrichtung) und/oder in einem Bezugsystem des Nutzfahrzeugs vorausberechnet werden. Ein Nullpunkt oder Ursprung (x=0) des Orts kann (beispielsweise in Kombination mit jedem Bezugsystem) durch das Nutzfahrzeug oder eine Fahrzeugfront des Nutzfahrzeugs bestimmt sein oder ortsfest, z.B. eine Straßenkreuzung, sein.

Der Abstand kann durch zeitliche Integration einer Differenz der vorausberechneten Verläufe der Fahrgeschwindigkeit des vorausfahrenden Fahrzeugs und der Fahrgeschwindigkeit des Nutzfahrzeugs vorausberechnet werden. Ein gemessener Ist-Abstand kann einen Anfangswert der Integration bestimmen.

Der Ist-Abstand zum vorausfahrenden Fahrzeug kann mittels mindestens eines Sensors gemessen werden. Mindestens ein Sensor kann an einer Fahrzeugfront des Nutzfahrzeugs angeordnet sein. Der mindestens eine Sensor kann einen Ultraschallsensor, eine Stereokamera und/oder einen Radarsensor umfassen.

Mindestens einer der oder die Verläufe der Fahrgeschwindigkeiten können ferner auf Grundlage von topografischen Daten und/oder eines vom Abstand abgängigen Luftwiderstands vorausberechnet werden. Das Vorausberechnen mindestens eines zukünftigen Verlaufs oder aller zukünftigen Verläufe kann von topografischen Daten abhängen, beispielsweise zusätzlich zu den bestimmten und/oder erhaltenen Parametern. Die topografischen Daten können eine Längsneigung (beispielsweise eine Steigung oder ein Gefälle) angeben. Die topografischen Daten können vom Nutzfahrzeug empfangen werden, zusammen mit einer Fahrtroute im Nutzfahrzeug gespeichert sein und/oder aus einem Kartenspeicher im Nutzfahrzeug ausgelesen werden.

Der Intervallbetrieb eines jeden Fahrzeugs (einschließlich des Nutzfahrzeugs) im Fahrzeugverband kann jeweils eine erste Phase und eine zweite Phase umfassen. Ein Antrieb, ein Antriebsstrang, oder jede andere Quelle eines Antriebsmoments (positives Eingriffsmoment); eine Bremse oder jede andere Quelle eines Bremsmoments (negatives Eingriffsmoment); und/oder jede andere in die Längsbewegung eingreifende Momentenquelle des jeweiligen Fahrzeugs kann jeweils in der ersten Phase in einem ersten Betriebszustand und in der zweiten Phase in einem vom ersten Betriebszustand verschiedenen zweiten Betriebszustand sein. Zumindest der erste Betriebszustand kann spezifisch für das jeweilige Fahrzeug sein. Der Intervallbetrieb des Nutzfahrzeugs oder jedes Fahrzeugs im Fahrzeugverband kann jeweils die erste Phase zum angetriebenen und/oder bremsenden Fahren des jeweiligen Fahrzeugs (Eingriffsphase) und die zweite Phase zum rollenden Fahren des jeweiligen Fahrzeugs (Rollphase) umfassen.

Die Längsführung kann ein Regeln des Eingriffsmoments, beispielsweise ein Regeln des Antriebs oder des Antriebsstrangs (beispielsweise des positiven Eingriffsmoments) des Nutzfahrzeugs, der Bremse (beispielsweise des negativen Eingriffsmoments) des Nutzfahrzeugs und/oder jedes in die Längsbewegung des Nutzfahrzeugs eingreifenden Moments auf Grundlage der vorausberechneten Verläufe umfassen. Die Bremse kann eine Betriebsbremse und/oder eine (beispielsweise verschleißfreie und/oder dosierbare) Dauerbremse umfassen. Ferner können positive und negative Eingriffsmomente von einem geregelten Aggregat, beispielsweise einer Elektromaschine (E-Maschine) erzeugt werden.

Das Regeln kann bei Unterschreiten eines Mindestabstands einen Eingriff der Bremse umfassen (Bremseingriff). Der Mindestabstand kann von der Fahrgeschwindigkeit (beispielsweise des Nutzfahrzeugs) abhängen. Eine Differenz zwischen vorausberechnetem Abstand und dem Mindestabstand am Ende der ersten Phase oder am Anfang der zweiten Phase kann kleiner sein als am Ende der zweiten Phase oder am Anfang der ersten Phase.

Der Antrieb des Nutzfahrzeugs oder jedes Fahrzeugs im Fahrzeugverband kann jeweils eine Verbrennungskraftmaschine oder einen Verbrennungsmotor umfassen. Der Verbrennungsmotor kann in der ersten Phase in einem wirkungsgradgünstigen Betriebsbereich (oder verbrauchsgünstigen oder effizienten Betriebszustand) betrieben werden. Alternativ oder ergänzend kann der Verbrennungsmotor in der zweiten Phase in einem Leerlaufbetrieb oder Schleppbetrieb betrieben werden.

Der Intervallbetrieb des Nutzfahrzeugs kann einen Regelungszyklus mit mindestens einmal der ersten Phase und einmal der zweiten Phase umfassen. Zwei aufeinanderfolgende Phasen (d. h. die erste Phase gefolgt von der zweiten Phase oder die zweite Phase gefolgt von der ersten Phase) werden auch als vollständiges Intervall bezeichnet. Der Antrieb kann in der ersten Phase das Nutzfahrzeug antreiben. Das Nutzfahrzeug kann in der zweiten Phase rollen.

Die vorausberechneten Verläufe (beispielsweise der Fahrgeschwindigkeit des Nutzfahrzeugs und des Abstands) können Führungsgrößen (auch: Soll-Verläufe) der Regelung sein. Indem die Regelung nicht nur durch einen Soll-Wert (oder Soll-Werte) zu einem bestimmten Zeitpunkt sondern einen zeitlichen Soll-Verlauf (beispielsweise auch über mehrere Regelungszyklen) geführt wird, kann eine schnell reagierende und gegen äußere Störeinflüsse robuste und/oder zeitlich glatte Regelung erreicht werden. Alternativ oder ergänzend können durch die vorausberechneten Verläufe Korrektureingriffe in einer bestimmten Phase (z. B. in der ersten Phase) erfolgen, beispielsweise auch wenn der Korrekturbedarf bereits zu einer früheren Phase (z.B. in der zweiten Phase vor der ersten Phase) festgestellt wird.

Als Ist-Größen der Regelung können die Fahrgeschwindigkeit des Nutzfahrzeugs und der Abstand zum vorausfahrenden Fahrzeug gemessen werden. Alternativ oder ergänzend zu einer direkten Messung des Abstands kann die Fahrgeschwindigkeit oder Relativgeschwindigkeit des vorausfahrenden Fahrzeugs gemessen und integriert werden. Alternativ oder ergänzend zur Messung der Fahrgeschwindigkeit des vorausfahrenden Fahrzeugs kann die Fahrgeschwindigkeit vom vorausfahrenden Fahrzeug (z. B. durch die Kommunikation) empfangen werden.

Der Abstand zum vorausfahrenden Fahrzeug im Fahrzeugverband kann so vorausberechnet und/oder geregelt sein, dass eine kraftstoff-verbrauchsgünstige Betriebsweise des Nutzfahrzeugs erreicht wird. Ein zeitliches Mittel des Soll-Verlaufs des Abstands kann zwischen 5 m und 25 m, beispielsweise 15 m, betragen. Ein Minimum des Soll-Verlaufs des Abstands (Mindestabstand) kann zwischen 3 m und 50 m, beispielsweise 10 m oder 25 m, betragen.

Das Vorausberechnen kann einen Soll-Verlauf des Abstands mit einem Minimum-Abstandswert bestimmen. Die Abstandsregelung kann einen kleineren Abstand als den Minimum-Abstandswert (optional auch durch Bremsung) einregeln. Der kleinere Abstand kann größer als ein Mindestabstand sein, bei dem eine übergeordnete Sicherheitsfunktion eingreift (beispielsweise durch Notbremsung).

Der Antrieb des Nutzfahrzeugs kann in der ersten Phase gemäß einem ersten Betriebszustand und in der zweiten Phase gemäß einem vom ersten Betriebszustand verschiedenen zweiten Betriebszustand gesteuert werden. Der erste Betriebszustand kann (zumindest im Wesentlichen) einem effizienten Betriebszustand des Antriebs entsprechen. Bei einer Verbrennungskraftmaschine kann der erste Betriebszustand (zumindest im Wesentlichen) einem Minimum des spezifischen Kraftstoffverbrauchs oder einem Bereich des Minimums entsprechen. Der erste Betriebszustand oder ein Zentrum des Betriebsbereichs kann durch Drehzahl und Drehmoment bestimmt sein. Der erste Betriebszustand oder das Zentrum des Betriebsbereichs kann (zumindest im Wesentlichen) das Minimum in einem Verbrauchskennfeld sein. Der zweite Betriebszustand kann einem Leerlaufbetrieb oder Schleppbetrieb des Antriebs des Nutzfahrzeugs entsprechen.

Der Antrieb kann in der ersten Phase zum Beschleunigen oder angetriebenen Fahren des Nutzfahrzeugs gesteuert werden. Das Nutzfahrzeug kann in der ersten Phase mittels des Antriebs beschleunigen oder (gegen einen Anstieg, Luftwiderstand und/oder Rollreibung) die Fahrgeschwindigkeit halten.

Alternativ oder ergänzend kann der Antrieb in der zweiten Phase zum Verzögern oder Rollen des Nutzfahrzeugs gesteuert werden. Das Nutzfahrzeug kann in der zweiten Phase bei ausgekuppeltem Antrieb rollen oder mittels des Antriebs verzögert werden.

Das Steuern des Antriebs des Nutzfahrzeugs kann ein zyklisches Alternieren zwischen Beschleunigen des Nutzfahrzeugs in der ersten Phase des Regelungszyklus und Rollen des Nutzfahrzeugs in der zweiten Phase des Regelungszyklus umfassen. Eine Zeitdauer des durch die Parameter bestimmten Verlaufs (beispielsweise der Fahrgeschwindigkeiten und/oder des Abstands) kann einer oder mehreren Zyklusdauern des Regelungszyklus entsprechen.

Der Intervallbetrieb des vorausfahrenden Fahrzeugs und/oder des nachfahrenden Fahrzeugs kann jeweils einen solchen Regelungszyklus mit einer ersten Phase und einer zweiten Phasen umfassen. Der Regelungszyklus, die erste Phase und/oder die zweite Phase des Nutzfahrzeugs können gegenüber jenen des vorausfahrenden und/oder nachfahrenden Fahrzeugs phasenverschoben sein, beispielsweise zur Abstandsregelung zwischen dem Nutzfahrzeug und dem vorausfahrenden und/oder nachfahrenden Fahrzeug.

Der Regelungszyklus muss nicht periodisch sein. Die Zyklusdauer aller Fahrzeuge (einschließlich des Nutzfahrzeugs) im Fahrzeugverband kann im Wesentlichen oder im Mittel über mehrere Regelzyklen einheitlich im Fahrzeugverband sein (auch: Zyklusdauer des Fahrzeugverbands).

Die gespeicherte Fahrtroute oder der Kartenspeicher kann (beispielsweise als Funktion des Orts) Angaben zur Fahrgeschwindigkeit des Fahrzeugverbands und/oder Zyklusdauer des Fahrzeugverbands umfassen. Alternativ oder ergänzend kann das im Fahrzeugverband vorausfahrende Fahrzeug durch seinen Intervallbetrieb und/oder die Kommunikation die Fahrgeschwindigkeit des Fahrzeugverbands und/oder die Zyklusdauer des Fahrzeugverbands vorgeben.

Die Parameter des jeweiligen Fahrzeugs können ein Antriebsvermögen für die erste Phase und/oder ein Rollvermögen für die zweite Phase des jeweiligen Fahrzeugs umfassen. Das Antriebsvermögen und das Rollvermögen können (beispielsweise positive bzw. negative) Beschleunigungen sein. Das Antriebsvermögen und das Rollvermögen können durch Werte mit der Einheit $m/s^2$ (beispielsweise in den Parametern) angegeben sein.

Das Antriebsvermögen kann eine Beschleunigung (beispielsweise auf einer horizontalen Fahrbahn), eine Antriebsleistung und/oder eine Traktionskraft des Antriebs des jeweiligen Fahrzeugs für die erste Phase angeben. Alternativ oder ergänzend kann das Rollvermögen eine Verzögerung (d.h. eine negative Beschleunigung, beispielsweise auf einer horizontalen Fahrbahn), eine Bremsleistung und/oder eine Widerstandskraft (beispielsweise einen Rollreibungswiderstand und/oder Luftwiderstand) des jeweiligen Fahrzeugs für die zweite Phase angeben.

Das Antriebsvermögen und das Rollvermögen (beispielsweise gemäß den Parametern) können unabhängig von lokalen Fahrbahneigenschaften (z. B. Neigung) und/oder momentanen Konstellationen des Fahrzeugverbands (z. B. Abstand) sein. Das Antriebsvermögen und das Rollvermögen (beispielsweise gemäß den Parametern) kann eine Eigenschaft des jeweiligen Fahrzeugs (beispielsweise unter Berücksichtigung seiner Beladung) sein.

Jedes der vorgenannten Antriebsvermögen und/oder Rollvermögen kann auch als "fahrzeugeigenes Antriebsvermögen" bzw. "fahrzeugeigenes Rollvermögen" bezeichnet werden.

Beispielsweise kann bei einem schweren Nutzfahrzeug die (positive oder negative) Beschleunigung bei konstanter Fahrbahnneigung (d.h. Gefälle oder Steigung) sehr gut durch eine einzige geschwindigkeitsunabhängige Konstante beschreibbar sein (sofern die Fahrgeschwindigkeit nicht stark variiert).

Für die zweite Phase kann diese Konstante ein Beispiel für ein von der Fahrbahnneigung abhängiges Rollvermögen sein, das im Fall verschwindender Fahrbahnneigung (horizontaler Fahrbahn) gleich dem fahrzeugeigenen Rollvermögen sein kann. Eine Abweichung des Rollvermögens vom fahrzeugeigenen Rollvermögen kann durch die variable Neigung der Fahrbahn und/oder den abstandabhängigen Luftwiderstand im Fahrzeugverband hervorgerufen werden. Entsprechendes kann für das Antriebsvermögen in der ersten Phase gelten.

In einer ersten Implementierung kann ausgehend vom fahrzeugeigenen Roll- und Antriebsvermögen der Einfluss der Neigung und/oder des Abstands auf die Beschleunigung als Veränderung oder Anpassung getrennt betrachtet werden.

Vorzugsweise umfassen in einer zweiten Implementierung die fahrzeugeigenen Roll- und Antriebsvermögen alle Einflüsse bis auf den Einfluss der Neigung (beispielsweise auch den Einfluss des Abstands). Der Anteil an der Beschleunigung außer der Neigung, also alle weiteren Fahrzeugeigenschaften, können zusammengefasst und beschrieben werden durch das fahrzeugeigene Rollvermögen in der zweiten Phase und das fahrzeugeigene Antriebsvermögen in der ersten Phase.

In beiden Implementierungen können das fahrzeugeigene Antriebsvermögen und das fahrzeugeigene Rollvermögen unabhängig von der Neigung (Steigung oder Gefälle) sein. Das fahrzeugeigene Antriebsvermögen und das fahrzeugeigene Rollvermögen können in der ersten Implementierung angepasst und in der zweiten Implementierung korrigiert werden aufgrund des Luftwiderstands, beispielsweise als Funktion des Abstands und/oder der Fahrgeschwindigkeit.

Das fahrzeugeigene Antriebsvermögen und das fahrzeugeigene Rollvermögen können zusammenfassend als Fahrzeugeigenschaften bezeichnet werden. Die Parameter eines jeden Fahrzeugs können die Fahrzeugeigenschaften und die kinematischen Prädikatoren des jeweiligen Fahrzeugs umfassen.

Beispielsweise umfassen die vom vorausfahrenden Fahrzeug empfangenen Parameter 2 Werte für das fahrzeugeigene Antriebsvermögen und das fahrzeugeigene Rollvermögen (als Fahrzeugeigenschaften) sowie 4 Werte für Zeit und Geschwindigkeit (als kinematische Prädikatoren) der 2 Umschaltpunkte zwischen der ersten Phase und der zweiten Phase des Intervallbetriebs des vorausfahrenden Fahrzeugs. Bereits diese 6 Werte in den kommunizierten Parametern können für den koordinierten und fahrzeug-individuellen Intervallbetrieb ausreichend sein.

Die je Fahrzeug kommunizierten Parameter können Fahrzeugeigenschaften und Prädikatoren umfassen. Die Fahrzeugeigenschaften können das fahrzeugeigene Antriebsvermögen und das fahrzeugeigene Rollvermögen umfassen. Diese Fahrzeugeigenschaften können im laufenden Betrieb nur geringfügig veränderlich sein (abhängig hauptsächlich von Geschwindigkeit und Abstand). Die Prädikatoren können nur die Umschaltpunkte umfassen.

Für das Nutzfahrzeug und/oder für das vorausfahrende Fahrzeug (oder jedes andere Fahrzeug im Fahrzeugverband) kann das Antriebsvermögen in der ersten Phase und/oder das Rollvermögen in der zweiten Phase aus einer zurückliegenden Fahrt geschätzt werden. Die Schätzung kann die (positive oder negative) Beschleunigung des jeweiligen Fahrzeugs erfassen. Alternativ oder ergänzend kann die Schätzung eine für die zurückliegende Fahrt angegebene Längsneigung, eine bei der zurückliegenden Fahrt gemessene Längsneigung, einen bei der zurückliegenden Fahrt gemessenen Abstand und/oder eine bei der zurückliegenden Fahrt gemessene Abstandsänderung berücksichtigen. Die Schätzung kann Fahrzeugeigenschaften des vorausfahrenden Fahrzeugs bestimmen, beispielsweise alternativ oder ergänzend zum Empfangen der Fahrzeugeigenschaften, oder diese korrigieren. Die Schätzung kann beim Schritt des Bestimmens oder beim Schritt des Vorausberechnens durchgeführt werden.

Die Fahrzeugeigenschaften können ferner eine Masse des jeweiligen Fahrzeugs umfassen.

Das Rollvermögen für die zweite Phase des Nutzfahrzeugs kann (vorzugsweise beim Bestimmen der Parameter des Nutzfahrzeugs oder beim Vorausberechnen der Verläufe) bestimmt oder verändert werden. Das Rollvermögen kann bestimmt oder verändert werden, indem der Verbrennungsmotor des Nutzfahrzeugs in der zweiten Phase entweder im Leerlaufbetrieb oder im Schleppbetrieb betrieben wird. Die Entscheidung über den Betrieb in der zweiten Phase kann vom (beispielsweise empfangenen) Rollvermögen mindestens eines oder aller weiteren Fahrzeuge im Fahrzeugverband abhängen.

Das Antriebsvermögen für die erste Phase und/oder das Rollvermögen für die zweite Phase des Nutzfahrzeugs können (beispielsweise ausgehend von den Parametern oder den Fahrzeugeigenschaften) abhängig von einem Abstand zwischen dem Nutzfahrzeug und dem vorausfahrenden Fahrzeug verändert oder angepasst werden, beispielsweise beim Bestimmen der Parameter und/oder beim Vorausberechnen eines der Verläufe. Das Antriebsvermögen (beispielsweise die Beschleunigung gemäß dem Antriebsvermögen) und/oder das Rollvermögen (beispielsweise die Verzögerung gemäß dem Rollvermögen) kann für die Vorausberechnung des Verlaufs der Fahrgeschwindigkeit des Nutzfahrzeugs verändert oder angepasst werden.

Der Abstand kann ein gemessener Abstand und/oder der vorausberechnete Abstand sein. Das Antriebsvermögen (beispielsweise eine Beschleunigung gemäß dem Antriebsvermögen) kann mit abnehmendem Abstand zunehmen. Das Rollvermögen (beispielsweise eine Verzögerung gemäß dem Rollvermögen) kann mit abnehmendem Abstand abnehmen.

Alternativ oder ergänzend können, beispielsweise beim Bestimmen oder beim Vorausberechnen, das Antriebsvermögen in der ersten Phase und/oder das Rollvermögen in der zweiten Phase des jeweiligen Fahrzeugs abhängig von einer durch die topografischen Daten angegebenen Längsneigung und/oder dem vom Abstand abhängigen Luftwiderstand verändert oder angepasst werden. Das Antriebsvermögen (beispielsweise die Beschleunigung gemäß dem fahrzeugeigenen Antriebsvermögen) und/oder das Rollvermögen (beispielsweise die Verzögerung gemäß dem fahrzeugeigenen Rollvermögen) können für die Vorausberechnung des mindestens einen Verlaufs der Fahrgeschwindigkeit des jeweiligen Fahrzeugs verändert werden. Geben die topografischen Daten eine Steigung an, kann eine Beschleunigung gemäß dem fahrzeugeigenen Antriebsvermögen reduziert werden (einschließlich eines Vorzeichenwechsels zu einer Verzögerung) und/oder eine Verzögerung gemäß dem fahrzeugeigenen Rollvermögen vergrößert werden. Geben die topografischen Daten ein Gefälle an, kann eine Beschleunigung gemäß dem fahrzeugeigenen Antriebsvermögen vergrößert werden und/oder eine Verzögerung gemäß dem fahrzeugeigenen Rollvermögen reduziert werden (einschließlich eines Vorzeichenwechsels zu einer Beschleunigung).

Die Längsneigung kann eine Längsneigung der Fahrbahn an der Stelle des jeweiligen Fahrzeugs oder eine Längsneigung des jeweiligen Fahrzeugs sein. Die Beschleunigung bzw. die Verzögerung kann gemäß der Längsneigung um einen Anteil der Erdbeschleunigung verändert oder angepasst werden.

Eine ursächliche Veränderung der Parameter oder Verläufe (beispielsweise aufgrund der Längsneigung oder des Abstands) wird auch als Anpassung bezeichnet. Eine reaktive Veränderung (in Reaktion auf die ursächliche Veränderung) der Parameter oder Verläufe wird auch als Korrektur oder Beeinflussung bezeichnet.

Auf die (beispielsweise aufgrund des Abstands und/oder der topografischen Daten veranlasste) Veränderung oder Anpassung des Antriebsvermögens und/oder des Rollvermögens kann (vorzugsweise beim Bestimmen der Parameter des Nutzfahrzeugs, beim Vorausberechnen der Fahrgeschwindigkeit des Nutzfahrzeugs und/oder beim Regeln) reagiert werden, beispielsweise durch mindestens einen der folgenden Schritte: Den Schritt des Veränderns oder Korrigierens einer Dauer der ersten Phase des Intervallbetriebs des Nutzfahrzeugs; den Schritt des Veränderns oder Korrigierens einer Dauer der zweiten Phase des Intervallbetriebs des Nutzfahrzeugs; und den Schritt des Veränderns oder Korrigierens eines Antriebsmoments (des Antriebs) des Nutzfahrzeugs oder der Beschleunigung des Nutzfahrzeugs in der ersten Phase.

Die Dauer der ersten Phase kann verlängert oder verkürzt werden im Fall einer Steigung bzw. eines Gefälles. Alternativ oder ergänzend kann die Dauer der zweiten Phase verkürzt oder verlängert werden im Fall einer Steigung bzw. eines Gefälles. Alternativ oder ergänzend kann in der ersten Phase das Antriebsmoment (beispielsweise in einem Bereich des ersten Betriebszustands) oder die Beschleunigung vergrößert oder verkleinert werden im Fall einer Steigung bzw. eines Gefälles.

Auf Grundlage der vorausberechneten Verläufe der Fahrgeschwindigkeiten (beispielsweise des vorausfahrenden Fahrzeugs und des Nutzfahrzeugs) und des Abstands können (ggf. veränderte) Soll-Verläufe der Fahrgeschwindigkeit des Nutzfahrzeugs und des Abstands berechnet werden. Die Soll-Verläufe können dem Steuern oder Regeln des Antriebs zugrunde gelegt werden.

Ein korrigierender Bremseingriff (beispielsweise durch den Antrieb oder ein Bremssystem des Nutzfahrzeugs) kann in der zweiten Phase in Reaktion auf die Anpassung des Antriebsvermögens und/oder des Rollvermögens unterbleiben. Beispielsweise umfasst der der Längsführung oder dem Regeln zugrunde gelegte Regelungszyklus (mindestens) eine erste Phase und eine zweite Phase, wobei die korrigierende Veränderung (beispielsweise der korrigierende Bremseingriff) ausschließlich in der ersten Phase erfolgt. Ein Regelungszyklus kann mit der zweiten Phase beginnen und mit der ersten Phase enden.

Die Parameter des Nutzfahrzeugs, die Parameter des vorausfahrenden Fahrzeugs oder jedes Fahrzeugs im Fahrzeugverband können mindestens einen Umschaltpunkt zum Umschalten bei der Längsführung des jeweiligen Fahrzeugs von der zweiten Phase zur ersten Phase und/oder mindestens einen Umschaltpunkt zum Umschalten bei der Längsführung des jeweiligen Fahrzeugs von der ersten Phase zur zweiten Phase angeben. Der Umschaltpunkt kann das entsprechende Umschalten bei der Längsführung im jeweiligen Fahrzeug bestimmen oder auslösen. Alternativ oder ergänzend kann der Verlauf (beispielsweise der Fahrgeschwindigkeit des Nutzfahrzeugs und/oder des vorausfahrenden Fahrzeugs) phasenweise vorausberechnet werden, von einem Umschaltpunkt zum nächsten Umschaltpunkt, beispielsweise auf Basis der (ggf. veränderten) Fahrzeugeigenschaft für die jeweilige Phase.

Der Umschaltpunkt kann einen Zeitpunkt (beispielsweise einen Startzeitpunkt), einen Ort (beispielsweise entlang der Fahrstrecke) und/oder eine Fahrgeschwindigkeit (beispielsweise einen Schwellwert der Fahrgeschwindigkeit) des jeweiligen Fahrzeugs bestimmen. Alternativ oder ergänzend kann sich der Schwellwert (statt auf die Fahrgeschwindigkeit) auf eine Relativgeschwindigkeit des Nutzfahrzeugs, beispielsweise zum vorausfahrenden Fahrzeug beziehen.

Das Bestimmen der Parameter des Nutzfahrzeugs kann ein Bestimmen der Umschaltpunkte umfassen, insbesondere ein Bestimmen von Geschwindigkeiten oder Schwellwerten der Fahrzeuggeschwindigkeit des Nutzfahrzeugs zum Umschalten zwischen den Phasen. Die Umschaltpunkte können Startzeitpunkte und/oder Geschwindigkeitsschwellen für die Antriebsphase und die Rollphase umfassen. Die Umschaltpunkte können zumindest aus fahrzeugintern bekannten Parametern für das Antriebsvermögen und für das Rollvermögen des Nutzfahrzeugs sowie aus den empfangenen Parametern bestimmt werden.

Die empfangenen Parameter des vorausfahrenden Fahrzeugs werden auch als Kenngrößen des zukünftigen Intervallbetriebs (beispielsweise der Antriebsphase und der Rollphase) des vorausfahrenden Fahrzeugs bezeichnet. Die empfangenen Parameter können 4 Kenngrößen (beispielsweise 4 reellwertige Zahlenwerte) für den zukünftigen Intervallbetrieb des vorausfahrenden Fahrzeugs umfassen. Vorausberechnete Verläufe (beispielsweise mit einer Vielzahl an örtlichen oder zeitlichen Stützpunkten) müssen nicht kommuniziert werden. Beispielsweise umfassen die Kenngrößen ein Minimum und ein Maximum der Fahrgeschwindigkeit des vorausfahrenden Fahrzeugs (optional jeweils mit zugehörigem Zeitpunkt) sowie Antriebsvermögen und Rollvermögen des vorausfahrenden Fahrzeugs. Das Minimum und das Maximum gemäß den empfangenen Parametern können mit Geschwindigkeitsschwellen übereinstimmen, die das vorausfahrende Fahrzeug der Längsführung (beispielsweise der Steuerung seines Antriebs) zugrunde legt.

Einerseits kann aus den empfangenen Parametern des vorausfahrenden Fahrzeugs (und optional dem im Nutzfahrzeug bekannten Verlauf der Längsneigung) und dem Abstand zum vorausfahrenden Fahrzeug der Verlauf der Fahrgeschwindigkeit des vorausfahrenden Fahrzeugs vorausberechnet werden. Andererseits kann aus den bestimmten Parametern des Nutzfahrzeugs (und optional verändert gemäß dem im Nutzfahrzeug bekannten Verlauf der Längsneigung und/oder dem Abstand) der Verlauf der Fahrgeschwindigkeit des Nutzfahrzeugs vorausberechnet werden. Aus beiden Geschwindigkeitsverläufen kann der Verlauf des Abstands (auch: Abstandstrajektorie) ermittelt werden. Zumindest der vorausberechnete Verlauf des Abstands kann Vorgabe (z. B. als Soll-Verlauf) für die Regelung des Antriebs (auch: Längsregelung, insbesondere Abstandsregelung) sein.

Beim Bestimmen der Startzeitpunkte für die Antriebs- und Rollphase kann berücksichtigt werden, dass ein Antriebsmoment in der Antriebsphase in einem wirkungsgradgünstigen Betriebspunkt im Motorkennfeld liegt und eine ausreichende Veränderbarkeit des Antriebsmoments (beispielsweise innerhalb eines vorbestimmten Bereichs des effizienten Betriebszustands) zur Abstandsregelung besteht (beispielsweise zur Regelung auf den vorausberechneten Soll-Verlauf des Abstands).

Beim Bestimmen der Startzeitpunkte für Antriebs- und Rollphase kann berücksichtigt werden, dass die Abstandsregelung vorteilhafterweise während der Antriebsphase stattfindet. Alternativ oder ergänzend kann am Ende der Rollphase (beispielsweise im vorausberechneten Soll-Verlauf des Abstands) ausreichend Abstand bereitgehalten sein, um (beispielsweise unter Einfluss von externen, unbekannten und/oder beim Vorausberechnen unberücksichtigten Störeinflüssen) die Rollphase selbst dann ohne Bremseingriff abzuschließen zu können, wenn der vorausberechnete Soll-Verlauf des Abstands unterschritten wird.

Beim Bestimmen der Startzeitpunkte für die Antriebs- und Rollphase oder beim Vorausberechnen des Soll-Verlaufs kann das Rollvermögen des Nutzfahrzeugs verändert oder korrigiert werden, beispielsweise indem für den zukünftigen Intervallbetrieb festgelegt wird, dass der Antrieb im Schleppbetrieb mitläuft (z. B. zum Vergrößern der Verzögerung in der zweiten Phase) oder das Nutzfahrzeug frei rollt (d. h. bei nicht eingekuppeltem Antrieb, z. B. zum Verringern der Verzögerung in der zweiten Phase). Alternativ oder ergänzend können weitere Nebenverbraucher oder Hybridkomponenten hinzugeschaltet werden (z. B. zum Vergrößern der Verzögerung) oder abgeschaltet werden (z. B. zum Verringern der Verzögerung). Die Korrektur kann in Abhängigkeit vom Rollvermögen der anderen Fahrzeuge im Fahrzeugverband getroffen werden. Hierbei kann das Rollvermögen des nachfahrenden Fahrzeugs am vorausfahrenden Fahrzeug empfangen werden.

Mit zunehmender Steigung kann der Intervallbetrieb des Antriebs von einem taktenden Modus in einen dauerhaft konstanten Betrieb übergehen, beispielsweise durch Vergrößern der anteiligen Dauer der ersten Phase am Regelzyklus. Dabei kann der effiziente Betriebszustand des Antriebs in der Antriebsphase beibehalten werden. Alternativ kann der Verbrauch minimiert werden innerhalb eines Bereichs außerhalb des effizienten Betriebszustands des Antriebs (modulierender Betrieb). Der Bereich des modulierenden Betriebs kann so bestimmt sein, dass eine Variation (z. B. Minimum und/oder Maximum) des vorausberechneten Verlaufs des Abstands für das Nutzfahrzeug oder für alle Fahrzeuge im Verband tolerierbar sind (beispielsweise ein Mindestabstand und/oder ein Höchstabstand eingehalten wird).

Optional können die kommunizierten Sollwerte für die Geschwindigkeitsschwellen im ersten Fahrzeug des Fahrzeugverbands (beispielsweise das Minimum und das Maximum der Fahrgeschwindigkeit des ersten Fahrzeugs, die als Parameter des vorausfahrenden Fahrzeugs im Nutzfahrzeug dahinter empfangen werden) derart bestimmt sein, dass für die nachfolgenden Fahrzeuge im Fahrzeugverband ein Intervallbetrieb (beispielsweise mittels des effizienten Betriebszustands) oder ein modulierender Betrieb (beispielsweise mit minimiertem Verbrauch unter der Nebenbedingung der Abstandsvariation) ermöglicht ist.

Die beim Bestimmen und/oder Vorausberechnen verwendeten Fahrzeugeigenschaften (beispielsweise das Antriebsvermögen und das Rollvermögen) des Nutzfahrzeugs können aus der zurückliegenden Fahrt geschätzt werden. Die Fahrzeugeigenschaften können geschätzt werden auf Grundlage der (beispielsweise aus den topografischen Daten) bekannten Längsneigung (z. B. Steigung oder Gefälle) und einer gemessenen Änderung des Abstands und/oder der Fahrgeschwindigkeit des Nutzfahrzeugs.

Streckenbezogene Anpassungen der Fahrzeugeigenschaften (wie z. B. an einem Gefällebeginn), die im vorausfahrenden Fahrzeug zu einer zeitlich erweiterten Rollphase führen, werden beim Vorausberechnen des Nutzfahrzeugs im vorausberechneten Verlauf der Fahrgeschwindigkeit des vorausfahrenden Fahrzeugs berücksichtigt (z. B. vor Erreichen des Gefällebeginns). Damit ist die Anpassung im Soll-Verlauf des Abstands berücksichtigt und ermöglicht dem Nutzfahrzeug die erweiterte Rollphase vollständig auszunutzen, auch wenn sich das eigene Rollvermögen des Nutzfahrzeugs vom Rollvermögen des vorausfahrenden Fahrzeugs unterscheidet.

Gemäß einem weiteren Aspekt der Erfindung ist eine Vorrichtung zur Steuerung eines Antriebs eines Nutzfahrzeugs in einem Fahrzeugverband hintereinanderfahrender Fahrzeuge bereitgestellt. Die Vorrichtung ist dazu ausgebildet, die Schritte des Verfahrensaspekts auszuführen oder zu bewirken.

Alternativ oder ergänzend umfasst die Vorrichtung eine Parametereinheit, die dazu ausgebildet ist, Parameter eines zukünftigen Intervallbetriebs des Antriebs des Nutzfahrzeugs in Kommunikation mit einem im Fahrzeugverband vorausfahrenden und/oder nachfahrenden, ebenfalls in einem Intervallbetrieb angetriebenen Fahrzeug zu bestimmen; und eine Steuereinheit, die dazu ausgebildet ist, den Antrieb des Nutzfahrzeugs im Intervallbetrieb auf Grundlage der bestimmten Parameter des Nutzfahrzeugs zu steuern.

Die Vorrichtung kann in mehreren Fahrzeugen des Fahrzeugverbands verbaut sein. Die Vorrichtung kann dazu ausgebildet sein, über eine Funkverbindung Daten, beispielsweise die Parameter, zu kommunizieren oder untereinander auszutauschen.

Die Erfindung betrifft ferner ein Nutzfahrzeug, insbesondere einen Lastkraftwagen oder einen Bus, mit einem gemäß dem Verfahrensaspekt gesteuerten Antrieb. Beispielsweise umfasst das Nutzfahrzeug die vorgenannte Vorrichtung zur Steuerung des Antriebs des Nutzfahrzeugs.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1  eine schematische Darstellung eines Fahrzeugverbands mit mehreren hintereinanderfahrenden Fahrzeugen;

Figur 2  ein schematisches Blockschaltbild eines ersten Ausführungsbeispiels einer Vorrichtung zur Steuerung eines Antriebs eines Nutzfahrzeugs in einem Fahrzeugverband, beispielsweise gemäß Figur 1;

Figur 3  schematische Verläufe für Fahrgeschwindigkeit und Abstand im Fahrzeugverband;

Figur 4  ein schematisches Blockschaltbild eines zweiten Ausführungsbeispiels der Vorrichtung zur Steuerung des Antriebs, beispielsweise gemäß Figur 1; und

Figur 5  schematische Verläufe für Fahrgeschwindigkeit und Abstand mit vorausberechneten Korrekturen.

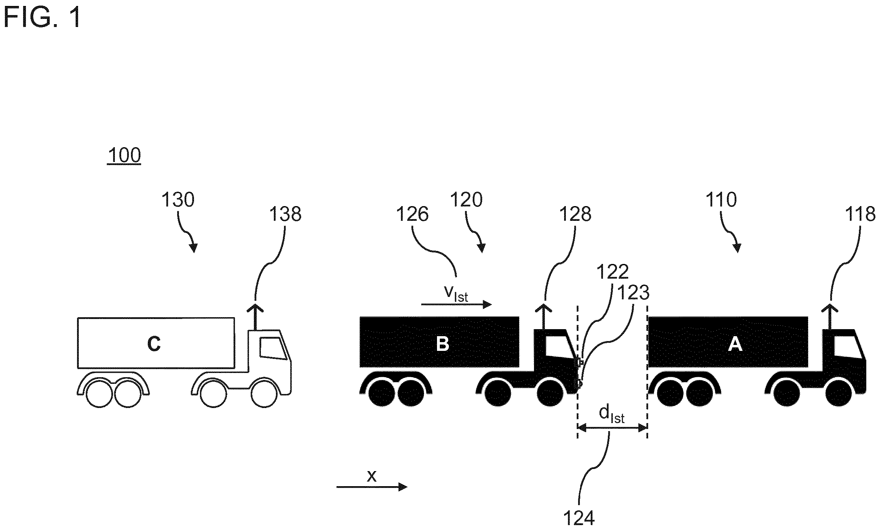

Figur 1 zeigt ein Beispiel eines allgemein mit Bezugszeichen 100 bezeichneten Fahrzeugverbands mit zwei oder mehr hintereinanderfahrenden Fahrzeugen 110, 120 und optional 130. Hierin beschriebene Vorrichtungen und Verfahren können jeweils in einzelnen oder jedem der Fahrzeuge 110, 120 und 130 implementiert sein.

Zugunsten einer klaren Beschreibung und ohne Beschränkung der Erfindung werden im Folgenden Ausführungsbeispiele der Vorrichtungen und Verfahren aus der Perspektive des zweiten Fahrzeuges 120 im Fahrzeugverband 100 beschrieben. Das Fahrzeug 120 umfasst Sensoren, beispielsweise eine Stereokamera 122 und/oder einen Radarsensor 123, zur Bestimmung des Abstands 124 zum vorausfahrenden Fahrzeug 110. Der Radarsensor 123 kann ferner die Fahrgeschwindigkeit 126 (absolute eigene Geschwindigkeit) des Fahrzeugs 120 und/oder die relative Geschwindigkeit zum vorausfahrenden Fahrzeug 110 messen. Dadurch können die Fahrgeschwindigkeit 126 des Fahrzeugs 120 und der Abstand 124 gemessen und, optional, die Fahrgeschwindigkeit des vorausfahrenden Fahrzeuges 110 bestimmt werden (beispielsweise als Summe der Fahrgeschwindigkeit 126 und der relativen Geschwindigkeit zum vorausfahrenden Fahrzeug 110, d.h., der Änderungsrate des Abstands 124).

Die Fahrzeuge 110, 120 und 130 im Fahrzeugverband 100 stehen in Kommunikation über Kommunikationsschnittstellen 118, 128 bzw. 138. Die Kommunikationsschnittstellen können Funkschnittstellen umfassen. Vorzugsweise hat jedes Fahrzeug Zugriff auf den vorausliegenden Verlauf von Gefälle oder Steigung (Längsneigung). Der Verlauf der Längsneigung in Abhängigkeit von der Weglänge x ist beispielsweise als Karteninformation oder Routeninformation im jeweiligen Fahrzeug gespeichert.

Mindestens zwei im Fahrzeugverband 100 hintereinanderfahrende Fahrzeuge 110, 120 und 130 fahren im Intervallbetrieb. Der Intervallbetrieb kann vom jeweiligen Fahrzeug bestimmt werden, beispielsweise falls der Intervallbetrieb für das jeweils eigene Fahrzeug Verbrauchsvorteile bietet.

Im ersten Fahrzeug 110 des Fahrzeugverbands 100 werden Geschwindigkeitsschwellen für das Umschalten zwischen Antriebsphase und Rollphase des Intervallbetriebs festgelegt, beispielsweise durch fest eingestellte Parameter oder Bedienvorgaben. Ferner können die Geschwindigkeitsschwellen im vorausfahrenden Fahrzeug 110 mittels der Kommunikationsschnittstelle 118 in Abstimmung mit den weiteren teilnehmenden Fahrzeugen 120 und 130 (optional unter Berücksichtigung der Steigung oder des Gefälles) bestimmt werden.

Jedes Fahrzeug 110, 120 und 130 bestimmt seine eigenen Umschaltpunkte für den jeweils eigenen Intervallbetrieb und teilt diese dem nachfahrenden Fahrzeug mit (beispielsweise dem nächsten nachfolgenden oder allen nachfolgenden Fahrzeugen im Fahrzeugverband 100). Auf Grundlage dieser Mitteilung bestimmt das nachfolgende Fahrzeug wiederum seinen eigenen Intervallbetrieb.

Die Umschaltpunkte können durch den Zeitpunkt des Umschaltens, den Ort des Umschaltens und/oder die Geschwindigkeitsschwelle des Umschaltens bestimmt sein. Die Umschaltpunkte zum Umschalten (oder Wechseln) zwischen Antriebsphase und Rollphase des Intervallbetriebs werden derart bestimmt, dass mindestens eine der drei folgenden Anforderungen möglichst gut erfüllt werden. Erstens wird eine gegenüber Störeinflüssen robuste Abstandsregelung erreicht, die eine kraftstoffsparende Fahrweise bei geringem Abstand möglichst ohne verbrauchsnachteilige Bremseingriffe ermöglicht. Beispielsweise ist der Umschaltpunkt von der Rollphase zur Antriebsphase für einen Abstand bestimmt oder vorausberechnet, der größer als ein Mindestabstand ist. Zweitens halten Fahrzeuge im Fahrzeugverband mit unterschiedlicher Motorisierung und/oder unterschiedlichen Rollverlusten eine im Fahrzeugverband einheitliche Durchschnittsgeschwindigkeit ein und/oder überschreiten nicht einen maximalen Abstand. Drittens schöpft jedes einzelne Fahrzeug mit seinem Intervallbetrieb im Fahrzeugverband die Vorteile des individuellen verbrauchsgünstigen Motorbetriebspunkts (effizienter Betriebszustand) und/oder des individuellen Rollverhaltens aus.

Ferner kann durch die Kommunikation der Umschaltpunkte der Intervallbetrieb im Fahrzeugverband durch einen kompakten und robusten Informationsaustausch realisiert werden.

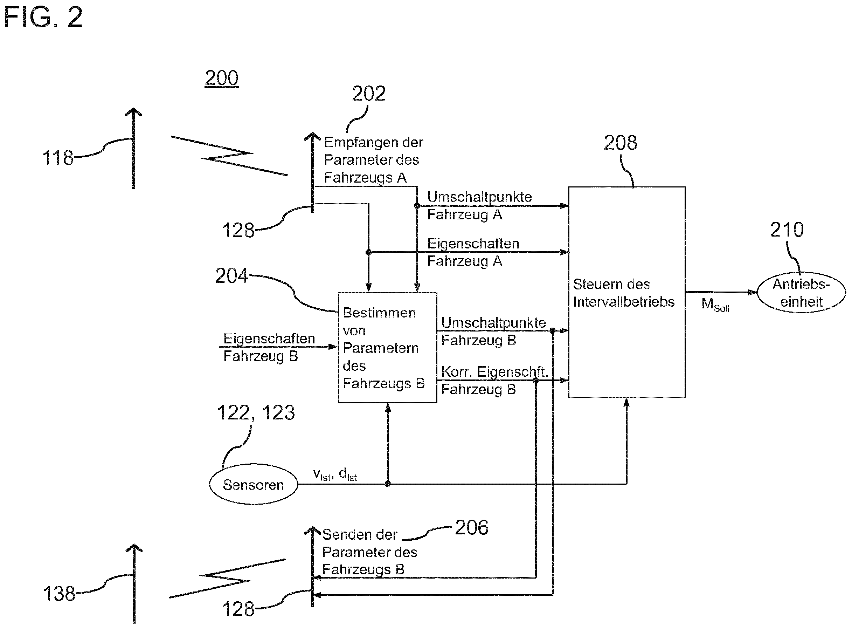

Figur 2 zeigt ein schematisches Blockschaltbild eines ersten Ausführungsbeispiels einer Vorrichtung 200 zur Steuerung eines Antriebs eines Nutzfahrzeugs in einem Fahrzeugverband hintereinanderfahrender Fahrzeuge. Die Vorrichtung kann in jedem Fahrzeug des Verbands 100 eingesetzt werden, beispielsweise im vorausfahrenden Fahrzeug 110 hinsichtlich der Kommunikation mit dem nachfahrenden Fahrzeug 120, in einem Fahrzeug 120 innerhalb des Fahrzeugverbands 100, oder hinsichtlich der Kommunikation mit dem vorausfahrenden Fahrzeug im letzten Fahrzeug 130 des Fahrzeugverbands 100.

Ein Intervallbetrieb umfasst mindestens zwei zeitlich voneinander getrennte Phasen. In einer ersten Phase des Intervallbetriebs wird dem Fahrzeug durch den Antrieb des Fahrzeugs Impuls in Fahrtrichtung zugeführt. Beispielsweise wird das Fahrzeug auf ebener Strecke beschleunigt oder das Fahrzeug hält seine Fahrgeschwindigkeit an einer Steigung. Die erste Phase wird auch als Antriebsphase bezeichnet.

In einer zweiten Phase des Intervallantriebs ist der Antrieb abgeschaltet (beispielsweise durch Abschaltung der Kraftstoffeinspritzung bei einem Verbrennungsmotor), ausgekoppelt und/oder es wird kein Impuls durch den Antrieb in Fahrtrichtung bewirkt. Beispielsweise arbeitet eine Verbrennungskraftmaschine des Fahrzeugs im Schleppbetrieb oder im Leerlauf oder ist abgeschaltet. Die zweite Phase wird auch als Rollphase bezeichnet.

Die durchschnittliche Fahrgeschwindigkeit (gemittelt über mehrere Phasen des Intervallbetriebs) ist bei einer gegebenen Strecke und Rollverlusten durch die Motorleistung in der Antriebsphase und dem zeitlichen Anteil der Rollphase an einem Regelungszyklus des Intervallbetriebs (der zumindest die Antriebsphase und die Rollphase umfasst) bestimmt. Da durch den zeitlichen Anteil der Antriebsphase ein zusätzlicher Freiheitsgrad der Antriebssteuerung zur Verfügung steht, kann die Motorleistung in der Antriebsphase (zumindest bis zu einer bestimmten Steigung) unabhängig von der durchschnittlichen Fahrgeschwindigkeit des Fahrzeuges und abhängig vom günstigen Motorbetriebspunkt bestimmt werden.

Der Intervallbetrieb jedes einzelnen Fahrzeugs wird durch Parameter des jeweiligen Fahrzeugs bestimmt. Die Parameter umfassen die Umschaltpunkte des Intervallbetriebs und Eigenschaften des Fahrzeugs. Die Umschaltpunkte können Zeitpunkte, Ortsangaben und/oder Geschwindigkeitsschwellen für das Umschalten von der ersten Phase in die zweite Phase und/oder von der zweiten Phase in die erste Phase umfassen. Die Fahrzeugeigenschaften können eine Beschleunigung auf ebener Strecke (ohne Steigung und ohne Gefälle) in der Antriebsphase und/oder eine Verzögerung auf ebener Strecke in der Rollphase umfassen. Optional umfassen die Fahrzeugeigenschaften ferner eine Fahrzeugmasse.

In einem Schritt 202 empfängt das Fahrzeug 120 die Parameter des vorausfahrenden Fahrzeugs 110. Auf Grundlage der empfangenen Parameter des vorausfahrenden Fahrzeugs 110 und der Eigenschaften des eigenen Fahrzeugs 120 bestimmt die Vorrichtung 200 die eigenen Parameter des Fahrzeugs 120. Die bestimmten Parameter umfassen die Umschaltpunkte des Fahrzeugs 120 in Abhängigkeit der mittels Geschwindigkeits- und Abstandssensoren (beispielsweise der Sensoren 122 und 123) erfassten Ist-Fahrgeschwindigkeit 126, $v_{Ist}$, des Fahrzeugs 120 und dem erfassten Ist-Abstand 124, $A_{Ist}$, zwischen dem Fahrzeug 120 und dem vorausfahrenden Fahrzeug 110.

Optional werden die Fahrzeugeigenschaften für die Antriebsphase und/oder die Rollphase (beispielsweise die Beschleunigung in der Antriebsphase im Fall einer ebenen Strecke und/oder die Verzögerung in der Rollphase im Fall einer ebenen Strecke, d. h. das fahrzeugeigene Antriebsvermögen bzw. Rollvermögen) als Funktion des Ist-Abstands 124 korrigiert. Die Korrektur kann eine verbesserte Aerodynamik aufgrund des geringen Ist-Abstands 124 berücksichtigen. Beispielsweise kann eine durch die Fahrzeugeigenschaften grundsätzlich vorbestimmte Beschleunigung (d. h. das fahrzeugeigene Antriebsvermögen) für die Antriebsphase im Fall einer ebenen Strecke $a_B$ betragen. Das fahrzeugeigene Antriebsvermögen wird aufgrund des Ist-Abstands 124 vergrößert oder korrigiert:

$$a_B^{korr} = a_B + (\rho_{Luft} \cdot c_W \cdot A_B \cdot v_{Ist}^2 \cdot f(d_{Ist})) / (2 \cdot m_B).$$

Dabei ist $\rho_{Luft}$ die Luftdichte, der Widerstandsbeiwert ist cw, die Luftangriffsfläche der Fahrzeugfront des Fahrzeugs ist $A_B$, und die Fahrzeugmasse des Fahrzeugs 120 ist $m_B$. Der stets positive Korrekturfaktor $f(d_{Ist})$ ist für große Abstände 124 gleich 1 (beispielsweise für $d_{Ist} \gg \sqrt{(A_B)}$). Für kleine Abstände 124 (beispielsweise $d_{Ist} \ll \sqrt{(A_B)}$) ist der Korrekturfaktor $f(d_{Ist})$ kleiner als 1, beispielsweise 0,5, 0,2 oder kleiner.

Die Umschaltpunkte des Fahrzeugs 120 und die (eventuell korrigierten) Eigenschaften des Fahrzeugs 120 werden im Schritt 206 als die Parameter des Fahrzeugs 120 an das nachfahrende Fahrzeug 130 gesendet.

Im Schritt 208 wird eine Antriebseinheit 210 des Fahrzeugs 120 gemäß dem Intervallbetrieb des Fahrzeugs 120 gesteuert. Die Antriebseinheit 210 kann den Motor, eine Bremse des Fahrzeugs 120 und ggf. eine Kupplung umfassen oder diese steuern. Die Steuerung der Antriebseinheit 210 basiert auf den zukünftigen Umschaltpunkten und den Eigenschaften des vorausfahrenden Fahrzeugs 110, die im Schritt 202 als Parameter des vorausfahrenden Fahrzeugs 110 empfangen wurden, und den im Schritt 204 bestimmten Umschaltpunkten und Eigenschaften des eigenen Fahrzeugs 120. Beispielsweise wird die Fahrgeschwindigkeit des vorausfahrenden Fahrzeugs 110, die Fahrgeschwindigkeit des eigenen Fahrzeugs 120 und der Abstand 124 für eine oder mehrere Phasen des Intervallbetriebs, für einen Regelungszyklus des Intervallbetriebs, für eine bestimmte Zeit und/oder eine bestimmte Fahrstrecke vorausberechnet.

Die Antriebseinheit 210 umfasst beispielsweise eine Verbrennungskraftmaschine, eine elektrische Maschine (E-Maschine), einen Hybridantriebsstrang (beispielsweise mit Verbrennungskraftmaschine und E-Maschine). Für die Steuerung ist der Antriebseinheit 210 ggf. eine Kupplung zuzuordnen. Die Steuerung im Schritt 208 kann die Dauer der Antriebsphase, die Dauer der Rollphase, ein Schleppmoment des Motors in der Rollphase und/oder ein Antriebsmoment des Motors in der Antriebsphase steuern.

Aufgrund des Schrittes 202 und des Schrittes 204 sind die Umschaltpunkte des vorausfahrenden Fahrzeugs 110 bzw. des eigenen Fahrzeugs 120 bekannt. Daraus werden im Schritt 208 die Fahrgeschwindigkeit des eigenen Fahrzeugs 120 und des vorausfahrenden Fahrzeugs 110 vorausberechnet. Aus den vorausberechneten Fahrgeschwindigkeiten der Fahrzeuge 120 und 110 wird der Abstand zwischen dem Fahrzeug 120 und dem Fahrzeug 110 ermittelt. Die

Vorausberechnung kann als Funktion der Zeit und/oder Wegstrecke x erfolgen (und wird als Verlauf oder Trajektorie bezeichnet). Beispielsweise wird ein Soll-Verlauf des Abstands 124 (auch: Abstands-Solltrajektorie) $d_{Soll}(x)$ und ein Soll-Verlauf der Fahrgeschwindigkeit 126 (auch: Geschwindigkeits-Solltrajektorie) $v_{Soll}(x)$ vorausberechnet. Auf Grundlage der Soll-Verläufe als Führungsgrößen regelt ein Längsregler die Fahrgeschwindigkeit 126 und den Abstand 124 des Fahrzeugs 120.

Da die Steuerung im Schritt 208 die Soll-Verläufe unter Berücksichtigung des optimalen Betriebspunkts des Motors vorausberechnet, erreicht das Fahrzeug 120 die Kraftstoffeinsparung des Intervallbetriebs innerhalb des Fahrzeugverbands 100 und somit zusätzlich mit der verbesserten Aerodynamik eines Fahrzeugs im Fahrzeugverband 100.

Für die Vorausberechnungen (beispielsweise der Fahrgeschwindigkeiten) genügt im einfachsten Fall die Kenntnis des Antriebsvermögens und des Rollvermögens des jeweiligen Fahrzeugs (als Teil der Fahrzeugeigenschaften). Das Antriebsvermögen beschreibt den Teil der Beschleunigung, der nur auf ebener Strecke auf das Fahrzeug wirkt, wenn das Fahrzeug im verbrauchsgünstigsten Betriebspunkt des Motorkennfelds betrieben wird. Das Rollvermögen beschreibt die Verzögerung (negative Beschleunigung), die sich auf ebener Strecke einstellt, wenn das Fahrzeug in einem verbrauchsgünstigen Rollbetrieb ausrollt (beispielsweise mit der Verbrennungskraftmaschine im Schleppbetrieb, bei abgekuppeltem Antrieb im Leerlauf und/oder abgeschaltetem Antrieb).

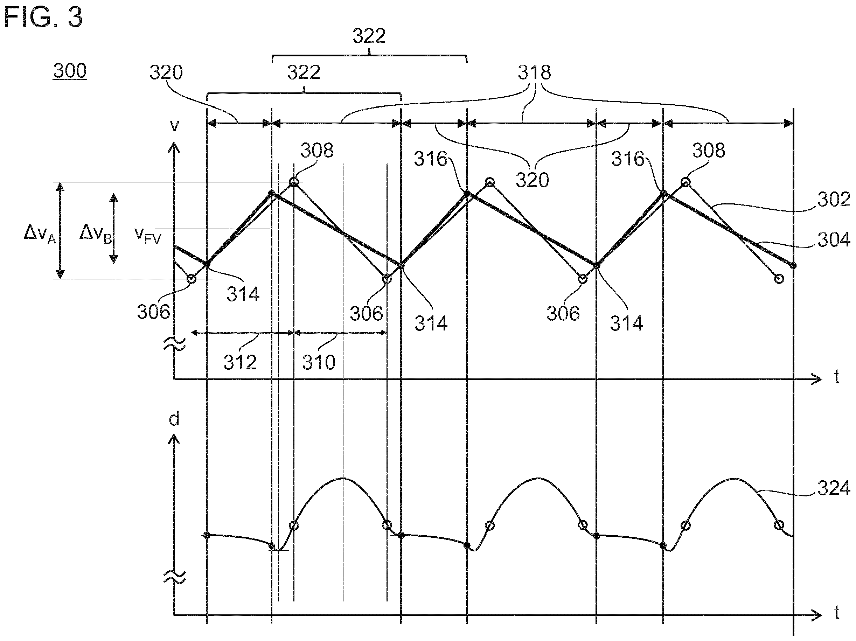

Figur 3 zeigt Verläufe 300 der Fahrgeschwindigkeit 302 des vorausfahrenden Fahrzeugs 110 und der Fahrgeschwindigkeit 304 des eigenen Fahrzeugs 120.

Die Umschaltpunkte 306 und 308 des vorausfahrenden Fahrzeugs 110 bestimmen den Übergang von der Rollphase 310 zur Antriebsphase 312 des vorausfahrenden Fahrzeugs 110 bzw. umgekehrt von der Phase 312 zur Phase 310. Der Umschaltpunkt 306 bestimmt ferner ein Minimum der Fahrgeschwindigkeit des vorausfahrenden Fahrzeugs 110, und der Umschaltpunkt 308 ein Maximum der Fahrgeschwindigkeit des vorausfahrenden Fahrzeugs 110. Die Durchschnittsgeschwindigkeit definiert eine Geschwindigkeit $v_{FV}$ des Fahrzeugverbands 100. Die Differenz zwischen Maximum und Minimum der Fahrgeschwindigkeit des vorausfahrenden Fahrzeugs 110 bestimmt eine Amplitude $\Delta v_A$ des Intervallbetriebs des vorausfahrenden Fahrzeugs 110.

Die Umschaltpunkte 314 und 316 des eigenen Fahrzeugs 120 bestimmen den Übergang von einer Rollphase 318 zu einer Antriebsphase 320 bzw. umgekehrt von der Antriebsphase 320 zur Rollphase 318. Am Umschaltpunkt 314 im Verlauf 304 nimmt die Fahrgeschwindigkeit 126 des eigenen Fahrzeugs 120 ein Minimum an. Am Umschaltpunkt 316 im Verlauf 304 nimmt die Fahrgeschwindigkeit 126 des eigenen Fahrzeugs 120 ein Maximum an. Die über den Verlauf 304 gemittelte Fahrgeschwindigkeit 126 entspricht der Geschwindigkeit $v_{FV}$ des Fahrzeugverbands 100. Die Differenz zwischen der Maximalgeschwindigkeit beim Umschaltpunkt 316 und der Minimalgeschwindigkeit beim Umschaltpunkt 314 wird auch als Geschwindigkeitsamplitude $\Delta v_B$ des Intervallbetriebs des Fahrzeugs 120 bezeichnet.

Die Amplitude des Intervallbetriebs des eigenen Fahrzeugs 120 kann von der Amplitude des vorausfahrenden Fahrzeugs 110 abweichen. Auch können die Phasen 318 und 320 des Intervallbetriebs des eigenen Fahrzeugs 120 phasenversetzt sein und/oder abweichende Zeitdauern aufweisen gegenüber den Phasen 310 bzw. 312 des vorausfahrenden Fahrzeugs 110.

Die vorausberechneten Verläufe der Fahrgeschwindigkeiten 302 und 304 umfassen mindestens ein vollständiges Intervall 322. Das vollständige Intervall 322 kann auch als Korrekturzyklus oder Ausgleichzyklus bezeichnet werden. Die für das mindestens eine vollständige Intervall 322 vorausberechneten Verläufe können als Soll-Verlauf der Regelung von Abstand und Geschwindigkeit in einem Regelungszyklus zugrunde liegen.

Jedes vollständige Intervall 322 umfasst mindestens eine Rollphase 318 und eine Antriebsphase 320. Dabei kann der Anfang des vollständigen Intervalls 322 durch eine Rollphase 318 oder eine Antriebsphase 320 bestimmt sein. In einer Implementierung kann die Vorausberechnung im Wechsel für die Rollphase 318 und für die Antriebsphase 320 ausgeführt werden.

Die Verläufe 302 und 304 der Fahrgeschwindigkeiten können allein durch die im Schritt 202 empfangenen Parameter bzw. die im Schritt 204 bestimmten Parameter vorausberechnet werden.

Ein Verlauf 324 des Abstands 124 wird durch zeitliche Integration der Differenz der vorausberechneten Verläufe 302 und 304 der Fahrgeschwindigkeiten erhalten. Der Verlauf 324 des Abstands 124 ist an den Übergangspunkten 306, 308, 314 und 316 stetig differenzierbar. An den Schnittpunkten der Verläufe 302 und 304 der Fahrgeschwindigkeiten weist der Verlauf 324 des Abstands 124 eine horizontale Tangente auf.

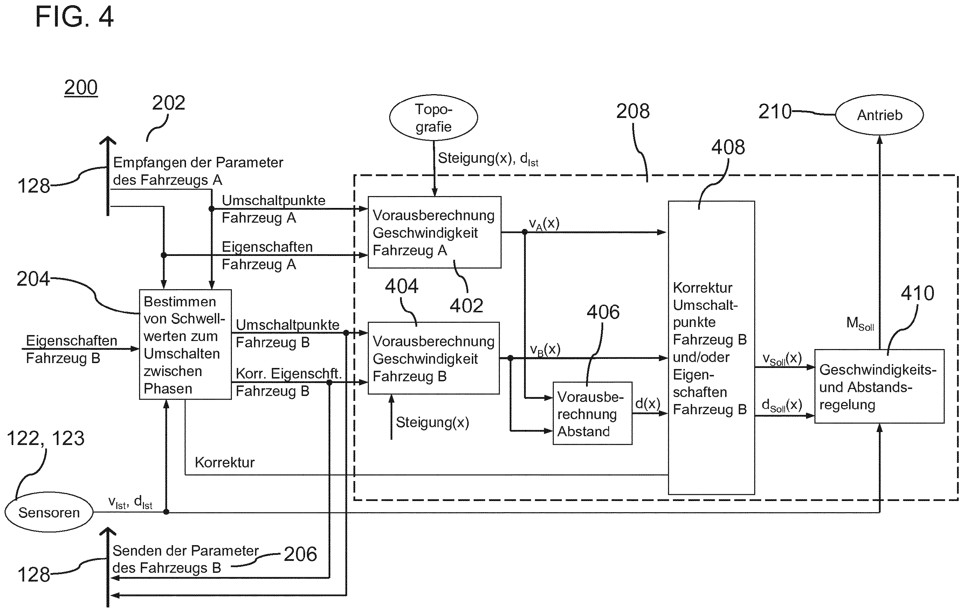

Figur 4 zeigt ein Blockschaltbild eines zweiten Ausführungsbeispiels der Vorrichtung 200. Beim in Figur 4 gezeigten Vorausberechnen 208 werden die vorausberechneten Verläufe 300 angepasst und/oder korrigiert.

Beispielsweise hängt die Vorausberechnung 402 des Verlaufs 302 der Fahrgeschwindigkeit des vorausfahrenden Fahrzeugs 110 und/oder die Vorausberechnung 404 des Verlaufs 304 der Fahrgeschwindigkeit des eigenen Fahrzeugs 120 von topografischen Daten wie der Längsneigung ab. Beispielsweise bei einem Fahrzeugverband 100 mit einer Fahrtroute, welche die Fahrzeuge jeweils gespeichert haben oder auf welche die Fahrzeuge jeweils Zugriff haben, kann die Längsneigung als Funktion der Wegstrecke x in den Schritten 402 und/oder 404 berücksichtigt werden.

In einer bevorzugten Implementierung umfassen die im Schritt 202 empfangenen Parameter bereits topografische Anpassungen und/oder Korrekturen der Fahrzeugeigenschaften, d. h. angepasste oder korrigierte Antriebs- und Rollvermögen (beispielsweise analog zu den im Schritt 206 gesendeten Parametern). Die empfangenen Umschaltpunkte 306 und 308 sind zu dem neigungsabhängigen Verlauf 302 kompatibel. Bei variabler Neigung entstehen zwischen den Umschaltpunkten 306 und 308 nicht zwingend Geradenstücke, sondern durch die Variation der Neigung gekrümmte Verläufe 302 der Fahrgeschwindigkeit $v_A(x)$. Die im Fahrzeug 120 durchgeführte topografische Anpassungen und/oder Korrekturen (beispielsweise im Schritt 204) betreffen das Antriebs- und Rollvermögen des eigenen Fahrzeugs 120. In einer alternativen Implementierung umfassen die im Schritt 202 empfangenen Parameter des vorausfahrenden Fahrzeugs 110 die fahrzeugeignen Antriebs- und Rollvermögen, welche im Nutzfahrzeug 120 (beispielsweise im Schritt 202 oder im Schritt 402) aufgrund der Neigung angepasst oder korrigiert werden.

Im Schritt 406 werden die Verläufe 302 und 304 zum Verlauf 324 des Abstands 124 integriert.

Aufgrund der angepassten und/oder korrigierten Fahrzeugeigenschaften ändern sich die Umschaltzeitpunkte im Schritt 408. Die veränderten Umschaltpunkte und/oder veränderten Fahrzeugeigenschaften sind an den Schritt 204 des Bestimmens der eigenen Parameter rückgekoppelt. Dadurch werden die im Schritt 408 bestimmten Soll-Verläufe für Abstand 124 und Fahrgeschwindigkeit 126 fortlaufend aktualisiert, beispielsweise für eine Regelung im Schritt 410, welche die mittlere Fahrgeschwindigkeit und damit den Abstand langfristig (beispielsweise im vollständigen Intervall 322) einhält. Vorzugsweise betreffen die Anpassungen und Korrekturen in den Soll-Verläufen nicht das aktuell von der Regelung 410 umgesetzte Intervall 322, sondern ein zukünftiges Intervall 322, beispielsweise durch die fortlaufende Rückkopplung.

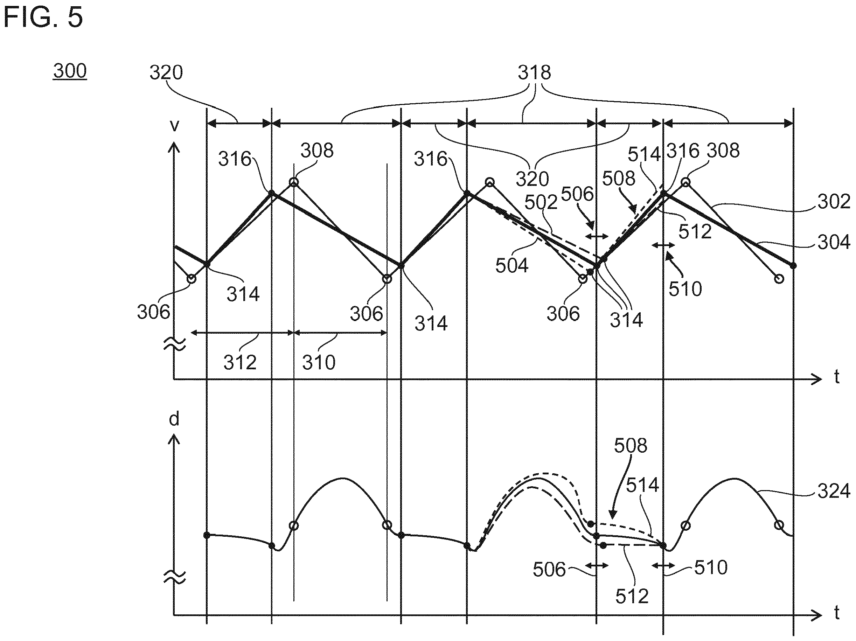

Figur 5 zeigt Korrekturmöglichkeiten, die in jeder Unterkombination im Schritt 408 ausgeführt und/oder im Schritt 410 in der Regelung umgesetzt werden können, beispielsweise zur Vermeidung oder Minimierung von Bremseingriffen in der Rollphase 318.

Gemäß der topografischen Daten kann für die Rollphase 318 die von den Fahrzeugeigenschaften ausgehende Anpassung zu einer Erhöhung 502 des Rollvermögens (beispielsweise durch ein Gefälle oder einen kleineren Abstand 124) gegenüber dem fahrzeugeigenen Rollvermögen (d. h. dem neigungsunabhängigen Rollvermögen, beispielsweise dem Rollvermögen in der Horizontalen) oder zu einer Verringerung 504 des Rollvermögens (beispielsweise durch eine Steigung) gegenüber dem fahrzeugeigenen Rollvermögen führen. Diese Anpassung wird bei der Vorausberechnung 404 berücksichtigt.

Somit liegen korrekte Vorausberechnungen der Verläufe der Geschwindigkeiten $v_A(x)$ und $v_B(x)$ und des Abstands $d(x)$ vor.

Figur 5 zeigt die Korrekturmöglichkeiten 506, 508 und 510, beispielsweise in Reaktion auf die Anpassung.

Durch einzelne oder eine Kombination der Korrekturmöglichkeiten können (bei Vorliegen einer variablen Längsneigung, einer konstanten Längsneigung oder bei verschwindender Längsneigung) der Soll-Verlauf des Abstands 124 und der Soll-Verlauf der eigenen Fahrgeschwindigkeit 126 so festgelegt werden, dass am Ende der Rollphase 318 noch ein Zusatzabstand (auch: Abstandspuffer oder Abstandsreserve) besteht. Dieser Zusatzabstand kann von der Regelung 410 ausgeschöpft werden zur Vermeidung oder Reduzierung von Bremseingriffen.

Eine erste Korrekturmöglichkeit 506 umfasst die Veränderung der Dauer der Rollphase 318. Die topografisch bedingte Vergrößerung 502 des Rollvermögens kann im Schritt 408 durch die Bestimmung einer längeren Rollphase 318, also einen späteren Umschaltpunkt 314, vollständig oder teilweise korrigiert werden. Die topografisch bedingte Verringerung 504 des Rollvermögens kann im Schritt 408 durch eine Verkürzung der Rollphase 318, also einen früheren Umschaltpunkt 314, vollständig oder teilweise korrigiert werden.

Eine zweite Korrekturmöglichkeit 508 betrifft die Veränderung des Antriebsmoments des Motors in der Antriebsphase 320. Alternativ oder ergänzend kann auf die Vergrößerung 502 des Rollvermögens (z. B. bei Gefälle) das Antriebsmoment verringert (Bezugszeichen 512) werden und/oder auf die Verringerung 504 des Rollvermögens (z. B. bei Steigung) das Antriebsmoment erhöht (Bezugszeichen 514) werden.

Eine dritte Korrekturmöglichkeit 510 umfasst die Veränderung der Dauer der Antriebsphase 320. Die topografisch bedingte Vergrößerung 502 des Rollvermögens kann im Schritt 408 durch die Bestimmung einer kürzeren Antriebsphase 320, also einen früheren Umschaltpunkt 316, vollständig oder teilweise korrigiert werden. Die topografisch bedingte Verringerung 504 des Rollvermögens kann im Schritt 408 durch eine Verlängerung der Antriebsphase 320, also einen späteren Umschaltpunkt 316, vollständig oder teilweise korrigiert werden.

Optional werden im Schritt 204 die Fahrzeugeigenschaften (beispielsweise Antriebs- und/oder Rollvermögen) des eigenen Fahrzeugs 120 korrigiert, z. B. aufgrund des vom Abstand 124 abhängigen Luftwiderstands. Alternativ oder ergänzend werden die Umschaltpunkte, die im Schritt 204 ohne Berücksichtigung der topografischen Daten bestimmt werden, im Schritt 408 als Referenz zur Feststellung eines Korrekturbedarfs benutzt. Beispielsweise werden im Schritt 408 die aus den angepassten Vorausberechnungen 402 und 404 (mit den in den Schritten 202 bzw. 204 empfangenen bzw. bestimmten Geschwindigkeitsschwellen) folgenden Umschaltpunkte mit den im Schritt 208 bestimmten Umschaltpunkten verglichen. Ein durch die topografische Anpassung verspäteter Umschaltpunkt 506 kann der Vergrößerung 502 und ein verfrühter Umschaltpunkt 506 kann der Verringerung 504 entsprechen. Jede Unterkombination der Korrekturmöglichkeiten 506, 508 und 510 kann im Schritt 408 in Reaktion auf die festgestellte Vergrößerung 502 oder Verringerung 504 ausgeführt werden.

Alternativ oder ergänzend kann der Korrekturbedarf festgestellt werden, wenn der gemessene Abstand 124 einen Höchstabstand überschreitet und/oder der gemessene Abstand 124 einen Mindestabstand unterschreitet.

Mit jeder Implementierung der Feststellung des Korrekturbedarfs und/oder der Korrekturmöglichkeiten ist es dem Schritt 408 möglich, die korrigierten Soll-Verläufe an die Regelung 410 auszugeben.

Im langfristigen Betrieb des Fahrzeugverbands 100 (auch: Kolonnenbetrieb) können durch die Kenntnis der Längsneigung Ausgangswerte für das Antriebsvermögen und das Rollvermögen (beispielsweise vor der Anpassung und/oder der Korrektur) rückwirkend anhand des tatsächlichen Geschwindigkeitsverlaufs von der Steuerung im Fahrzeug 120 geschätzt werden, insbesondere auch in Abhängigkeit vom Abstand 124 zum vorausfahrenden Fahrzeug 110.

In jedem Ausführungsbeispiel können im Ergebnis alle Fahrzeuge 110, 120 und 130 im Fahrzeugverband 100 in einem (zumindest im Wesentlichen) synchronen Intervallbetrieb fahren, wobei die Antriebs- und Rollphasen unterschiedlich lang sein können und zeitlich versetzt beginnen können. Die Geschwindigkeitsamplituden der Fahrzeuge im Fahrzeugverband 100 können unterschiedlich sein. Fahrzeuge mit großem Antriebsvermögen und/oder gutem Rollverhalten benötigen im Intervallbetrieb nur einen geringen zeitlichen Anteil für die Antriebsphase.

Beispielsweise können die Fahrzeuge 110 und 120 eine konstante Steigung (z. B. eine längsgeneigte Ebene) befahren. Falls, wie in den Figuren 3 und 5 gezeigt, das Fahrzeug 120 besser rollt und ein geringfügig besseres Antriebsvermögen aufweist, ist die Geschwindigkeitsamplitude $\Delta v_B$ des Intervallbetriebs des Fahrzeugs 120 geringer als die Geschwindigkeitsamplitude $\Delta v_A$ des Intervallbetriebs des Fahrzeugs 110. Der Geschwindigkeitsmittelwert $v_{FV}$ der Fahrzeuge 110 und 120 ist gleich. So wird der Abstand 124 über mehrere Regelzyklen eingehalten.

Die Rollphase 318 des Fahrzeugs 120 ist länger ausgedehnt als die Rollphase 310 des Fahrzeugs 110. Die Rollphase 318 startet früher, so dass sich am Ende der Rollphase 318 ein geringfügig größerer Abstand 124 einstellt. Dieser größere Abstand wird während der Antriebsphase 320 wieder ausgeglichen. Somit ist eine robuste und kraftstoffeffiziente Abstandsregelung (auf die in den Figuren 3 und 5 abgebildete Soll-Verläufe) möglich, denn in der Rollphase 318 können Störungen im gemessenen Abstand 124 durch die Korrekturmöglichkeiten 506, 508 und/oder 510 korrigiert werden. Die Abweichung im Abstand 124 (gemäß der in Figur 5 gestrichelt gezeichneten Verläufe 324) wird auch als Abstandstoleranzband bezeichnet.

Die Abweichung kann in der Rollphase 318 entstehen. Die Abweichung kann in der Antriebsphase 320 gemäß der Korrektur im Schritt 408 und/oder mittels des Abstandsreglers 410 ausgeregelt werden, beispielsweise durch Variation des Antriebsmoments im wirkungsgradgünstigen Betriebsbereich des Motors gemäß der Korrekturmöglichkeit 508.

Für Fahrzeuge mit geringem Antriebsvermögen und/oder schlechtem Rollverhalten, oder für Abschnitte mit erhöhter Steigung, kann die Rollphase ersetzt werden durch eine zweite Antriebsphase mit reduziertem aber trotzdem noch verbrauchsgünstigem Antriebsmoment. Das Antriebsmoment in der zweiten Antriebsphase ist so gering, dass die Fahrgeschwindigkeit in der zweiten Antriebsphase abnimmt. Dies wird als modulierende Steuerung des Motors bezeichnet.

Im Grenzfall an Steigungen kann die Geschwindigkeitsamplitude für den Intervallbetrieb im ersten Fahrzeug des Fahrzeugverbandes reduziert werden, bis hin zur Fahrt mit konstanter Fahrgeschwindigkeit oder zur Fahrt mit reduzierter Geschwindigkeit $v_{FV}$.

Obwohl die Erfindung unter Bezugnahme auf bestimmte Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

**Bezugszeichenliste**

| | |
|---|---|
| 100 | Fahrzeugverband |
| 110 | Vorausfahrendes Fahrzeug |
| 118 | Kommunikationsschnittstelle des vorausfahrenden Fahrzeugs |
| 120 | Fahrzeug innerhalb des Fahrzeugverbands |
| 122 | Stereokamera |
| 123 | Radarsensor |
| 124 | Abstand zum vorausfahrenden Fahrzeug |
| 126 | Fahrgeschwindigkeit |
| 128 | Kommunikationsschnittstelle des Fahrzeug innerhalb des Fahrzeugverbands |
| 130 | Nachfahrendes Fahrzeug |
| 138 | Kommunikationsschnittstelle des nachfahrenden Fahrzeugs |
| 200 | Vorrichtung zur Antriebssteuerung |
| 202 | Empfangen von Parametern |
| 204 | Bestimmen von Parametern |
| 206 | Senden der Parameter |
| 208 | Steuern des Antriebs im Intervallbetrieb |
| 210 | Antriebseinheit |
| 300 | Vorausberechnete Verläufe |
| 302 | Verlauf der Fahrgeschwindigkeit des vorausfahrenden Fahrzeugs |
| 304 | Verlauf der Fahrgeschwindigkeit des eigenen Fahrzeugs |
| 306 | Umschaltpunkt des vorausfahrenden Fahrzeugs von Rollphase zu Antriebsphase |
| 308 | Umschaltpunkt des vorausfahrenden Fahrzeugs von Antriebsphase zu Rollphase |
| 310 | Rollphase des vorausfahrenden Fahrzeugs |
| 312 | Antriebsphase des vorausfahrenden Fahrzeugs |
| 314 | Umschaltpunkt des eigenen Fahrzeugs von Rollphase zu Antriebsphase |
| 316 | Umschaltpunkt des eigenen Fahrzeugs von Antriebsphase zu Rollphase |
| 318 | Rollphase des eigenen Fahrzeugs |
| 320 | Antriebsphase des eigenen Fahrzeugs |
| 322 | Vollständiges Intervall des eigenen Fahrzeugs |
| 324 | Vorausberechneter Verlauf des Abstands |
| 402 | Vorausberechnen der Fahrgeschwindigkeit des vorausfahrenden Fahrzeugs |
| 404 | Vorausberechnen der Fahrgeschwindigkeit des eigenen Fahrzeugs |
| 406 | Vorausberechnen des Abstands |
| 408 | Korrektur des vorausberechneten Verlaufs |
| 410 | Regelung des Antriebs |
| 502 | Abweichung zu größeren Geschwindigkeiten |
| 504 | Abweichung zu kleineren Geschwindigkeiten |
| 506 | Erste Korrekturmöglichkeit |
| 508 | Zweite Korrekturmöglichkeit |
| 510 | Dritte Korrekturmöglichkeit |
| 512 | Reduziertes Antriebsmoment |
| 514 | Vergrößertes Antriebsmoment |

**Patentansprüche**

1. Verfahren zur Längsführung eines Nutzfahrzeugs (120) in einem Fahrzeugverband (100) hintereinanderfahrender Fahrzeuge (110, 120, 130), umfassend:

    Bestimmen (204) von Parametern eines zukünftigen Intervallbetriebs der Längsführung des Nutzfahrzeugs (120) in Kommunikation (202; 206) mit einem im Fahrzeugverband (100) vorausfahrenden und/oder nachfahrenden, ebenfalls in einem Intervallbetrieb angetriebenen Fahrzeug (110; 130), wobei der Intervallbetrieb jedes Fahrzeugs (110; 120; 130) im Fahrzeugverband (100) jeweils eine erste Phase (312; 320) zum angetriebenen Fahren des jeweiligen Fahrzeugs (110; 120; 130) und eine zweite Phase (310; 318) zum rollenden Fahren des jeweiligen Fahrzeugs (110; 120; 130) umfasst, und wobei durch die Kommunikation (202; 206) die Intervallbetriebe der Fahrzeuge (110; 120; 130) eine Frequenz des Intervallbetriebs angleichen; Empfangen (202) von Parametern des zukünftigen Intervallbetriebs einer Längsführung des vorausfahrenden Fahrzeugs (110), vorzugsweise falls das Nutzfahrzeug das letzte Fahrzeug im Fahrzeugverband ist oder innerhalb des Fahrzeugverbands (100) angeordnet ist, wobei die Parameter des Nutzfahrzeugs (120) abhängig von den empfangenen Parametern des vorausfahrenden Fahrzeugs (110) bestimmt werden;
Senden (206) der bestimmten Parameter des Nutzfahrzeugs (120) an das nachfahrende Fahrzeug (130) zum Bestimmen von Parametern des zukünftigen Intervallbetriebs einer Längsführung des nachfahrenden Fahrzeugs (130), vorzugsweise falls das Nutzfahrzeug das erste Fahrzeug im Fahrzeugverband ist oder innerhalb des Fahrzeugverbands (100) angeordnet ist; und
Längsführen (208) des Nutzfahrzeugs (120) im Intervallbetrieb auf Grundlage der bestimmten Parameter des Nutzfahrzeugs.

2. Verfahren nach Anspruch 1, wobei die Längsführung (208) mindestens einen der folgenden Schritte umfasst:

    Vorausberechnen (402) eines zukünftigen Verlaufs (302) einer Fahrgeschwindigkeit des vorausfahrenden Fahrzeugs (110) auf Grundlage der empfangenen Parameter des vorausfahrenden Fahrzeugs (110);
    Vorausberechnen (404) eines zukünftigen Verlaufs (304) einer Fahrgeschwindigkeit (126) des Nutzfahrzeugs (120) auf Grundlage der bestimmten Parameter des Nutzfahrzeugs (110); und
    Vorausberechnen (406) eines zukünftigen Verlaufs (324) eines Abstands (124) zwischen dem Nutzfahrzeug (120) und dem vorausfahrenden Fahrzeug (110) auf Grundlage der vorausberechneten Verläufe (302, 304) der Fahrgeschwindigkeit des vorausfahrenden Fahrzeugs (110) und der Fahrgeschwindigkeit (126) des Nutzfahrzeugs (120).

3. Verfahren nach Anspruch 2, wobei mindestens einer der oder die Verläufe (302, 304) der Fahrgeschwindigkeiten ferner auf Grundlage von topografischen Daten und/oder eines vom Abstand abhängigen Luftwiderstands vorausberechnet (402; 404) werden.

4. Verfahren nach Anspruch 2 oder 3, wobei die Längsführung (208) ferner ein Regeln (410) eines Antriebs (210) und/oder einer Bremse des Nutzfahrzeugs (120) auf Grundlage der vorausberechneten Verläufe (302, 304, 324) umfasst.

5. Verfahren nach einem der Ansprüche 1 bis 4, wobei der Intervallbetrieb des Nutzfahrzeugs oder jedes Fahrzeugs (110; 120; 130) im Fahrzeugverband (100) in der ersten Phase (312; 320) ein bremsendes Fahren des jeweiligen Fahrzeugs (110; 120; 130) umfasst.

6. Verfahren nach einem der Ansprüche 1 bis 5, wobei das Regeln (410) bei Unterschreiten eines Mindestabstands einen Bremseingriff umfasst, und eine Differenz zwischen vorausberechnetem Abstand und dem Mindestabstand am Anfang der zweiten Phase kleiner ist als am Ende der zweiten Phase.

7. Verfahren nach einem der Ansprüche 1 bis 6, wobei ein Antrieb des Nutzfahrzeugs oder jedes Fahrzeugs (110; 120; 130) im Fahrzeugverband (100) jeweils einen Verbrennungsmotor umfasst, welcher in der ersten Phase (312; 320) in einem wirkungsgradgünstigen Betriebsbereich des Verbrennungsmotors und/oder in der zweiten Phase (310; 318) in einem Leerlaufbetrieb oder Schleppbetrieb betrieben wird.

8. Verfahren nach einem der Ansprüche 1 bis 7, wobei die Parameter des jeweiligen Fahrzeugs (110; 120; 130) ein Antriebsvermögen in der ersten Phase (312; 320) und/oder ein Rollvermögen in der zweiten Phase (310; 318) des jeweiligen Fahrzeugs (110; 120; 130) umfassen.

9. Verfahren nach Anspruch 7 und 8, wobei, vorzugsweise beim Bestimmen oder beim Vorausberechnen, das Rollvermögen in der zweiten Phase des Nutzfahrzeugs (120) bestimmt oder verändert wird, indem der Verbrennungsmotor des Nutzfahrzeugs (120) in der zweiten Phase (318), abhängig vom Rollvermögen mindestens eines weiteren Fahrzeugs (110; 130) im Fahrzeugverband (100), im Leerlaufbetrieb oder im Schleppbetrieb betrieben wird.

10. Verfahren nach Anspruch 8 oder 9, wobei für das Nutzfahrzeug (120) und/oder jedes andere Fahrzeug (110; 130) des Fahrzeugverbands (100), vorzugsweise beim Bestimmen oder beim Vorausberechnen, das Antriebsvermögen in der ersten Phase und/oder das Rollvermögen in der zweiten Phase aus einer zurückliegenden Fahrt geschätzt wird, optional unter Berücksichtigung einer für die zurückliegende Fahrt angegebenen Längsneigung, einer bei der zurückliegenden Fahrt gemessenen Längsneigung, eines bei der zurückliegenden Fahrt gemessenen Abstands und/oder einer bei der zurückliegenden Fahrt gemessenen Abstandsänderung.

11. Verfahren nach einem der Ansprüche 8 bis 10 in Verbindung mit Anspruch 5, wobei, vorzugsweise beim Bestimmen oder beim Vorausberechnen, das Antriebsvermögen in der ersten Phase und/oder das Rollvermögen in der zweiten Phase des jeweiligen Fahrzeugs (110; 120) abhängig von einer durch die topografischen Daten angegebenen Längsneigung und/oder dem vom Abstand abhängigen Luftwiderstand verändert werden.

12. Verfahren nach einem der Ansprüche 8 bis 11, wobei auf eine Veränderung des Antriebsvermögens und/oder des Rollvermögens reagiert wird, vorzugsweise beim Vorausberechnen oder beim Regeln (410), durch mindestens einen der folgenden Schritte:

   Verändern (510) einer Dauer der ersten Phase (320) des Intervallbetriebs des Nutzfahrzeugs (120);
   Verändern (506) einer Dauer der zweiten Phase (318) des Intervallbetriebs des Nutzfahrzeugs (120); und
   Verändern (508) eines Antriebmoments des Nutzfahrzeugs (120) in der ersten Phase (320).

13. Verfahren nach einem der Ansprüche 1 bis 12, wobei die bestimmten Parameter und/oder die empfangenen Parameter zur Längsführung des jeweiligen Fahrzeugs (110; 120) einen Umschaltpunkt (306; 314) zum Umschalten von der zweiten Phase (310; 318) zur ersten Phase (312; 320) und/oder einen Umschaltpunkt (308; 316) zum Umschalten von der ersten Phase (312; 320) zur zweiten Phase (310; 318) umfassen.

14. Vorrichtung zur Längsführung eines Nutzfahrzeugs (120) in einem Fahrzeugverband (100) hintereinanderfahrender Fahrzeuge (110, 120, 130), die dazu ausgebildet ist, die folgenden Schritte auszuführen oder zu bewirken:

   Bestimmen (204) von Parametern eines zukünftigen Intervallbetriebs der Längsführung des Nutzfahrzeugs (120) in Kommunikation (202; 206) mit einem im Fahrzeugverband (100) vorausfahrenden und/oder nachfahrenden, ebenfalls in einem Intervallbetrieb angetriebenen Fahrzeug (110; 130), wobei der Intervallbetrieb jedes Fahrzeugs (110; 120; 130) im Fahrzeugverband (100) jeweils eine erste Phase (312; 320) zum angetriebenen Fahren des jeweiligen Fahrzeugs (110; 120; 130) und eine zweite Phase (310; 318) zum rollenden Fahren des jeweiligen Fahrzeugs (110; 120; 130) umfasst, und wobei durch die Kommunikation (202; 206) die Intervallbetriebe der Fahrzeuge (110; 120; 130) eine Frequenz des Intervallbetriebs angleichen;
   Empfangen (202) von Parametern des zukünftigen Intervallbetriebs einer Längsführung des vorausfahrenden Fahrzeugs (110), vorzugsweise falls das Nutzfahrzeug das letzte Fahrzeug im Fahrzeugverband ist oder innerhalb des Fahrzeugverbands (100) angeordnet ist, wobei die Parameter des Nutzfahrzeugs (120) abhängig von den empfangenen Parametern des vorausfahrenden Fahrzeugs (110) bestimmt werden;
   Senden (206) der bestimmten Parameter des Nutzfahrzeugs (120) an das nachfahrende Fahrzeug (130) zum Bestimmen von Parametern des zukünftigen Intervallbetriebs einer Längsführung des nachfahrenden Fahrzeugs (130), vorzugsweise falls das Nutzfahrzeug das erste Fahrzeug im Fahrzeugverband ist oder innerhalb des Fahrzeugverbands (100) angeordnet ist; und
   Längsführen (208) des Nutzfahrzeugs (120) im Intervallbetrieb auf Grundlage der bestimmten Parameter des Nutzfahrzeugs.

## Claims

1. A method for longitudinally guiding a utility vehicle (120) in a vehicle combination (100) of vehicles (110, 120, 130) travelling one behind the other, comprising:

   determining (204) parameters of a future interval operation of the longitudinal guidance of the utility vehicle (120) in communication (202; 206) with a vehicle (110; 130) which is travelling ahead and/or behind in the vehicle combination (100) and is also powered in an interval operation, wherein the interval operation of each vehicle (110; 120; 130) in the vehicle combination (100) comprises in each case a first phase (312; 320) for the powered travel of the respective vehicle (110; 120; 130) and a second phase (310; 318) for the coasting travel of the respective vehicle (110; 120; 130), and wherein by means of the communication (202; 206) the interval operations of the vehicles (110; 120; 130) approximate to a frequency of the interval operation;
   receiving (202) parameters of the future interval operation of longitudinal guidance of the vehicle (110) travelling ahead, preferably if the utility vehicle is the last vehicle in the vehicle combination or is arranged within the vehicle combination (100),
   wherein the parameters of the utility vehicle (120) are determined as a function of the received parameters of the vehicle (110) travelling ahead;
   sending (206) the determined parameters of the utility vehicle (120) to the vehicle (130) travelling behind, in order to determine parameters of the future interval operation of longitudinal guidance of the vehicle (130) travelling behind, preferably if the utility vehicle is the first vehicle in the vehicle combination or is arranged within the vehicle combination (100); and

longitudinally guiding (208) the utility vehicle (120) in the interval operation on the basis of the determined parameters of the utility vehicle.

2. The method according to Claim 1, wherein the longitudinal guidance (208) comprises at least one of the following steps:

pre-calculating (402) a future progression (302) of a velocity of the vehicle (110) travelling ahead on the basis of the received parameters of the vehicle (110) travelling ahead;

pre-calculating (404) a future progression (304) of a velocity (126) of the vehicle (120) on the basis of the determined parameters of the utility vehicle (110); and

pre-calculating (406) a future progression (324) of a distance (124) between the utility vehicle (120) and the vehicle (110) travelling ahead, on the basis of the pre-calculated progressions (302, 304) of the velocity of the vehicle (110) travelling ahead and the velocity (126) of the utility vehicle (120) .

3. The method according to Claim 2, wherein at least one of the or the progressions (302, 304) of the vehicle velocity are also pre-calculated (402; 404) on the basis of topographical data and/or an air resistance which is dependent on the distance.

4. The method according to Claim 2 or 3, wherein the longitudinal guidance (208) also comprises regulating (410) a drive (210) and/or a brake of the utility vehicle (120) on the basis of the pre-calculated profiles (302, 304, 324).

5. The method according to one of Claims 1 to 4, wherein the interval operation of the utility vehicle or of each vehicle (110; 120; 130) in the vehicle combination (100) comprises, in the first phase (312; 320), a braking travel of the respective vehicle (110; 120; 130).

6. The method according to one of Claims 1 to 5, wherein the regulation (410) comprises a braking intervention when a minimum distance is undershot, and a difference between a pre-calculated distance and the minimum distance is smaller at the start of the second phase than at the end of the second phase.

7. The method according to one of Claims 1 to 6, wherein a drive of the utility vehicle or of each vehicle (110; 120; 130) in the vehicle combination (100) comprises in each case an internal combustion engine which is operated in the first phase (312; 320) in an operating range of the internal combustion engine which is favourable for efficiency and/or in the second phase (310; 318) in an idling operating mode or overrun operating mode.

8. The method according to one of Claims 1 to 7, wherein the parameters of the respective vehicle (110; 120; 130) comprise a drive capability in the first phase (312; 320) and/or a rolling capability in the second phase (310; 318) of the respective vehicle (110; 120; 130).

9. The method according to Claims 7 and 8, wherein preferably during the determination or during the pre-calculation the rolling capacity is determined or changed in the second phase of the utility vehicle (120) by operating the internal combustion engine of the utility vehicle (120) in the second phase (318) as a function of the rolling capacity of at least one further vehicle (110; 130) in the vehicle combination (100), in the idling operating mode or in the overrun operating mode.

10. The method according to Claim 8 or 9, wherein, for the utility vehicle (120) and/or for any other vehicle (110; 130) of the vehicle combination (100) the drive capability is estimated in the first phase and/or the rolling capability is estimated in the second phase from preceding travel, preferably during the determination or during the pre-calculation, optionally taking into account a longitudinal inclination which is specified for the preceding travel, a longitudinal inclination which is measured during the preceding travel, a distance which is measured during the preceding travel and/or a change in distance which is measured during the preceding travel.

11. The method according to one of Claims 8 to 10 in conjunction with Claim 5, wherein, preferably during the determination or during the pre-calculation, the drive capability is changed in the first phase and/or the rolling capability is changed in the second phase of the respective vehicle (110; 120) as a function of a longitudinal inclination specified by the topographical data and/or the air resistance which is dependent on the distance.

12. The method according to one of Claims 8 to 11, wherein there is a reaction to a change in the drive capability and/or the rolling capability, preferably during the pre-calculation or during the regulation (410), by means of at least one of the following steps:

changing (510) a duration of the first phase (320) of the interval operation of the utility vehicle (120);

changing (506) a duration of the second phase (318) of the interval operation of the utility vehicle (120); and

changing (508) a drive torque of the utility vehicle (120) in the first phase (320).

13. The method according to one of Claims 1 to 12, wherein the determined parameters and/or the received parameters for the longitudinal guidance of the respective vehicle (110; 120) comprise a switching point (306; 314) for switching from the second phase (310; 318) to the first phase (312; 320) and/or a switching point (308; 316) for switching from the first phase (312; 320) to the second phase (310; 318).

14. A device for the longitudinal guidance of a utility vehicle (120) in a vehicle combination (100) of the vehicles (110, 120, 130) which are travelling one behind the other, which device is designed to carry out or bring about the following steps:

determining (204) parameters of a future interval operation of the longitudinal guidance of the utility vehicle (120) in communication (202; 206) with a vehicle (110; 130) which is travelling ahead and/or behind and is also powered in an interval operation, wherein the interval operation of each vehicle (110; 120; 130) in the vehicle combination (100) comprises in each case a first phase (312; 320) for the powered travel of the respective vehicle (110; 120; 130) and a second phase (310; 318) for the coasting travel of the respective vehicle (110; 120; 130), and wherein by means of the communication (202; 206) the interval operations of the vehicles (110; 120; 130) approximate to a frequency of the interval operation;

receiving (202) parameters of the future interval operation of longitudinal guidance of the vehicle (110) which is travelling ahead, preferably if the utility vehicle is the last vehicle in the vehicle combination or is arranged within the vehicle combination (100),

wherein the parameters of the utility vehicle (120) are determined as a function of the received parameters of the vehicle (110) travelling ahead;

sending (206) the determined parameters of the utility vehicle (120) to the vehicle (130) which is travelling behind, in order to determine parameters of the future interval operation of longitudinal guidance of the vehicle (130) which is travelling behind, preferably if the utility vehicle is the first vehicle in the vehicle combination or is arranged within the vehicle combination (100); and

longitudinal guidance (208) of the utility vehicle (120) in the interval operation on the basis of the determined parameters of the utility vehicle.

## Revendications

1. Procédé de guidage longitudinal d'un véhicule utilitaire (120) dans un convoi (100) de véhicules (110, 120, 130) roulant les uns derrière les autres, comportant :

la détermination (204) de paramètres d'un fonctionnement intermittent ultérieur du guidage longitudinal du véhicule utilitaire (120) en communication (202 ; 206) avec un véhicule (110 ; 130) qui précède et/ou qui suit dans le convoi de véhicules (100) et qui est entraîné également suivant un fonctionnement intermittent, dans lequel le fonctionnement intermittent de chaque véhicule (110 ; 120 ; 130) dans le convoi de véhicules (100) comporte respectivement une première phase (312 ; 320) pour la conduite entraînée du véhicule respectif (110 ; 120 ; 130) et une deuxième phase (310 ; 318) pour la conduite en roue libre du véhicule respectif (110 ; 120 ; 130), et dans lequel, grâce à la communication (202 ; 206), les fonctionnements intermittents des véhicules (110 ; 120 ; 130) adaptent une fréquence du fonctionnement intermittent ;

la réception (202) de paramètres du fonctionnement intermittent ultérieur d'un guidage longitudinal du véhicule qui précède (110), de préférence dans le cas où le véhicule utilitaire est le dernier véhicule dans le convoi de véhicules ou est disposé à l'intérieur du convoi de véhicules (100),

dans lequel les paramètres du véhicule utilitaire (120) sont déterminés en fonction des paramètres reçus du véhicule qui précède (110) ;

l'envoi (206) des paramètres déterminés du véhicule utilitaire (120) au véhicule qui suit (130) pour la détermination de paramètres du fonctionnement intermittent ultérieur d'un guidage longitudinal du véhicule qui suit (130), de préférence dans le cas où le véhicule utilitaire est le premier véhicule dans le convoi de véhicules ou est disposé à l'intérieur du convoi de véhicules (100) ; et

le guidage longitudinal (208) du véhicule utilitaire (120) lors du fonctionnement intermittent sur la base des paramètres déterminés du véhicule utilitaire.

2. Procédé selon la revendication 1, dans lequel le guidage longitudinal (208) comporte au moins l'une des étapes suivantes :

le calcul préalable (402) d'une allure ultérieure (302) d'une vitesse de conduite du véhicule qui précède (110) sur la base des paramètres reçus du véhicule qui précède (110) ;

le calcul préalable (404) d'une allure ultérieure (304) d'une vitesse de conduite (126) du véhicule utilitaire (120) sur la base des paramètres déterminés du véhicule utilitaire (110) ; et le calcul préalable (406) d'une allure ultérieure (324) d'une distance (124) entre le véhicule utilitaire (120) et le véhicule qui précède (110) sur la base des allures calculées préalablement (302, 304) de la vitesse de conduite du véhicule qui précède (110) et de la vitesse de conduite (126) du véhicule utilitaire (120).

3. Procédé selon la revendication 2, dans lequel au moins une des allures ou les allures (302, 304) des vitesses de conduite sont calculées préalablement (402 ; 404) en outre sur la base de données topographiques et/ou d'une résistance à l'air dépendant de la distance.

4. Procédé selon la revendication 2 ou 3, dans lequel le guidage longitudinal (208) comporte en outre une régulation (410) d'un entraînement (210) et/ou d'un frein du véhicule utilitaire (120) sur la base des allures calculées préalablement (302, 304, 324).

5. Procédé selon l'une des revendications 1 à 4, dans lequel le fonctionnement intermittent du véhicule utilitaire ou de chaque véhicule (110 ; 120 ; 130) dans le convoi de véhicules (100) dans la première phase (312 ; 320) comporte une conduite décélérée du véhicule respectif (110 ; 120 ; 130).

6. Procédé selon l'une des revendications 1 à 5, dans lequel la régulation (410) comporte, lorsque l'on passe au-dessous d'une distance minimale, une intervention de freinage, et une différence entre la distance calculée préalablement et la distance minimale est plus petite au début de la deuxième phase qu'à la fin de la deuxième phase.

7. Procédé selon l'une des revendications 1 à 6, dans lequel un entraînement du véhicule utilitaire ou de chaque véhicule utilitaire (110 ; 120 ; 130) dans le convoi de véhicules (100) comporte respectivement un moteur à combustion interne, lequel fonctionne dans une plage de fonctionnement de rendement favorable du moteur à combustion interne dans la première phase (312 ; 320) et/ou fonctionne suivant un fonctionnement au ralenti ou en fonctionnement en mode entraîné dans la deuxième phase (310 ; 318).

8. Procédé selon l'une des revendications 1 à 7, dans lequel les paramètres du véhicule respectif (110 ; 120 ; 130) comportent une capacité d'entraînement dans la première phase (312 ; 320) et/ou une capacité de roulage en roue libre dans la deuxième phase (310 ; 318) du véhicule respectif (110 ; 120 ; 130).

9. Procédé selon les revendications 7 et 8, dans lequel, de préférence lors de la détermination ou lors du calcul préalable, la capacité de roulage en roue libre dans la deuxième phase du véhicule utilitaire (120) est déterminée ou modifiée, par le fait que le moteur à combustion interne du véhicule utilitaire (120) fonctionne en fonctionnement au ralenti ou en fonctionnement en mode entraîné dans la deuxième phase (318), en fonction de la capacité de roulage en roue libre d'au moins un autre véhicule (110 ; 130) dans le convoi de véhicules (100).

10. Procédé selon la revendication 8 ou 9, dans lequel pour le véhicule utilitaire (120) et/ou chaque autre véhicule (110 ; 130) du convoi de véhicules (100), de préférence lors de la détermination ou lors du calcul préalable, la capacité d'entraînement dans la première phase et/ou la capacité de roulage en roue libre dans la deuxième phase sont évaluées à partir d'une conduite antérieure, éventuellement en tenant compte d'une inclinaison longitudinale donnée pour la conduite antérieure, d'une inclinaison longitudinale mesurée lors de la conduite antérieure, d'une distance mesurée lors de la conduite antérieure et/ou d'une variation de distance mesurée lors de la conduite antérieure.

11. Procédé selon l'une des revendications 8 à 10 en association avec la revendication 5, dans lequel, de préférence lors de la détermination ou lors du calcul préalable, la capacité d'entraînement dans la première phase et/ou la capacité de roulage en roue libre dans la deuxième phase du véhicule respectif (110 ; 120) sont modifiées en fonction d'une inclinaison longitudinale donnée par les données topographiques et/ou de la résistance à l'air dépendant de la distance.

12. Procédé selon l'une des revendications 8 à 11, dans lequel on réagit à une variation de la capacité d'entraînement et/ou de la capacité de roulage en roue libre, de préférence lors du calcul préalable ou lors de la régulation (410), par au moins l'une des étapes suivantes :

variation (510) d'une durée de la première phase (320) du fonctionnement intermittent du véhicule utilitaire (120) ; variation (506) d'une durée de la deuxième phase (318) du fonctionnement intermittent du véhicule utilitaire (120) ; et variation (508) d'un couple d'entraînement du véhicule utilitaire (120) dans la première phase (320).

13. Procédé selon l'une des revendications 1 à 12, dans lequel les paramètres déterminés et/ou les paramètres reçus pour le guidage longitudinal du véhicule respectif (110 ; 120) comportent un point de commutation (306 ; 314) pour la commutation de la deuxième phase (310 ; 318) à la première phase (312 ; 320) et/ou un point de commutation (308 ; 316) pour la commutation de la première phase (312 ; 320) à la deuxième phase (310 ; 318) .

14. Dispositif de guidage longitudinal d'un véhicule utilitaire (120) dans un convoi (100) de véhicules (110, 120, 130) roulant les uns derrière les autres, lequel dispositif est conçu pour effectuer ou pour provoquer les étapes suivantes :

la détermination (204) de paramètres d'un fonctionnement intermittent ultérieur du guidage longitudinal du véhicule utilitaire (120) en communication (202 ; 206) avec un véhicule (110 ; 130) qui précède et/ou qui suit dans le convoi de véhicules (100) et qui est entraîné également suivant un fonctionnement intermittent, dans lequel le fonctionnement intermittent de chaque véhicule (110 ; 120 ; 130) dans le convoi de véhicules (100) comporte respectivement une première phase (312 ; 320) pour la conduite entraînée du véhicule respectif (110 ; 120 ; 130) et une deuxième phase (310 ; 318) pour la conduite en roue libre du véhicule respectif (110 ; 120 ; 130), et dans lequel, grâce à la communication (202 ; 206), les fonctionnements intermittents des véhicules (110 ; 120 ; 130) adaptent une fréquence du fonctionnement intermittent ;
la réception (202) de paramètres du fonctionnement intermittent ultérieur d'un guidage longitudinal du véhicule qui précède (110), de préférence dans le cas où le véhicule utilitaire est le dernier véhicule dans le convoi de véhicules ou est disposé à l'intérieur du convoi de véhicules (100),
dans lequel les paramètres du véhicule utilitaire (120) sont déterminés en fonction des paramètres reçus du véhicule qui précède (110) ;
l'envoi (206) des paramètres déterminés du véhicule utilitaire (120) au véhicule qui suit (130) pour la détermination de paramètres du fonctionnement intermittent ultérieur d'un guidage longitudinal du véhicule qui suit (130), de préférence dans le cas où le véhicule utilitaire est le premier véhicule dans le convoi de véhicules ou est disposé à l'intérieur du convoi de véhicules (100) ; et
le guidage longitudinal (208) du véhicule utilitaire (120) lors du fonctionnement intermittent sur la base des paramètres déterminés du véhicule utilitaire.

EP 3 285 129 B1

# FIG. 1

FIG. 2

200

118

138

202 — Empfangen der Parameter des Fahrzeugs A

128

204 — Bestimmen von Parametern des Fahrzeugs B

Eigenschaften Fahrzeug B

122, 123 — Sensoren

$v_{Ist}$, $d_{Ist}$

206 — Senden der Parameter des Fahrzeugs B

128

Umschaltpunkte Fahrzeug A

Eigenschaften Fahrzeug A

Umschaltpunkte Fahrzeug B

Korr. Eigenschft. Fahrzeug B

208 — Steuern des Intervallbetriebs

$M_{Soll}$

210 — Antriebs-einheit

# FIG. 3

# FIG. 4

200

202

128 — Empfangen der Parameter des Fahrzeugs A

Topografie

Steigung(x), $d_{Ist}$

208

210 — Antrieb

408

Umschaltpunkte Fahrzeug A

Eigenschaften Fahrzeug A

Vorausberechnung Geschwindigkeit Fahrzeug A

$v_A(x)$

204

Bestimmen von Schwellwerten zum Umschalten zwischen Phasen

Eigenschaften Fahrzeug B

Umschaltpunkte Fahrzeug B

Korr. Eigenschft. Fahrzeug B

404

402

406

Vorausberechnung Geschwindigkeit Fahrzeug B

Steigung(x)

$v_B(x)$

Vorausberechnung Abstand

$d(x)$

Korrektur Umschaltpunkte Fahrzeug B und/oder Eigenschaften Fahrzeug B

$v_{Soll}(x)$

$M_{Soll}$

410

Geschwindigkeits- und Abstandsregelung

$d_{Soll}(x)$

122, 123

Korrektur

Sensoren

$v_{Ist}$, $d_{Ist}$

128 — Senden der Parameter des Fahrzeugs B — 206

EP 3 285 129 B1

# FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0263262 A2
- EP 2251240 A1
- US 20140005906 A1

**In der Beschreibung aufgeführte Nicht-Patentliteratur**

- Effect of Pulse-and-Glide Strategy on Traffic Flow for a Platoon of Mixed Automated and Manually Driven Vehicles. COMPUTER-AIDED CIVIL AND INFRA-STRUCTURE ENGINEERING. Wiley, 2015, vol. 30, 892-905